# EUROPEAN PATENT SPECIFICATION

(11) **EP 3 270 641 B1**
(45) Date of publication and mention of the grant of the patent: **08.07.2020**
(21) Application number: 15888754.7
(22) Date of filing: 11.04.2015
(51) Int. Cl.: H04W 52/28, H04W 92/18, H04L 5/00, H04W 72/04, H04W 92/20

(54) **RESOURCE ALLOCATION METHOD, DEVICE AND SYSTEM**
RESSOURCENZUWEISUNGSVERFAHREN, -VORRICHTUNG UND -SYSTEM
PROCÉDÉ, DISPOSITIF ET SYSTÈME D'ATTRIBUTION DE RESSOURCE

(43) Date of publication of application: 17.01.2018
(73) Proprietor: Huawei Technologies Co., Ltd., Longgang District Shenzhen, Guangdong 518129 (CN)
(72) Inventor: ZHANG, Liangliang, Shenzhen Guangdong 518129 (CN); CHAI, Li, Shenzhen Guangdong 518129 (CN); CAO, Zhenzhen, Shenzhen Guangdong 518129 (CN); ZHANG, Xingwei, Shenzhen Guangdong 518129 (CN)
(74) Representative: Gill Jennings & Every LLP
(86) International application number: PCT/CN2015/076386
(87) International publication number: WO 2016/165049

(56) References cited:
- WO-A1-2014/133703
- CN-A- 103 748 907
- CN-A- 104 202 821
- US-B2- 8 839 362
- CATT: "Enhancement on discovery in inter-frequency/ inter-PLMN scenario", 3GPP DRAFT; R2-151239, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), XP050952977, Retrieved from the Internet: URL:http://www.3gpp.org/ftp/tsg_ran/WG2_RL 2/TSGR2_89bis/Docs/ [retrieved on 2015-04-10]
- SAMSUNG: "Resource Allocation for Discovery Transmission in Non Serving Carrier and Scell", 3GPP DRAFT; R2-151203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), XP050952947, Retrieved from the Internet: URL:http://www.3gpp.org/ftp/tsg_ran/WG2_RL 2/TSGR2_89bis/Docs/ [retrieved on 2015-04-10]
- SONY: "D2D discovery in the presence of multiple carriers and PLMNs", 3GPP DRAFT; R2-151082 D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), XP050952900, Retrieved from the Internet: URL:http://www.3gpp.org/ftp/tsg_ran/WG2_RL 2/TSGR2_89bis/Docs/ [retrieved on 2015-04-10]
- ITRI: "Discussion on D2D communications handover for service continuity", 3GPP DRAFT; R2-151068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), XP050952886, Retrieved from the Internet: URL:http://www.3gpp.org/ftp/tsg_ran/WG2_RL 2/TSGR2_89bis/Docs/ [retrieved on 2015-04-10]

## Description

### TECHNICAL FIELD

The present disclosure relates to the field of communications technologies, and in particular, to a resource allocation method, device, and system.

### BACKGROUND

Device to device (English: device to device, D2D for short) communication is a new technology that allows data transmission to be directly performed between user equipments (English: user equipment, UE for short).

Currently, it is required in D2D communication standards that user equipment can transmit a D2D discovery (discovery) message only in a primary cell of the user equipment. That is, a base station provides a resource of the primary cell to a D2D device, that is, the user equipment, so that the user equipment conveniently uses the resource to transmit a D2D discovery message. Many user equipments usually exist in one primary cell. In this case, if a large quantity of user equipments simultaneously use a resource of the primary cell to transmit a D2D discovery message, resources on the primary cell become inadequate, and load on the primary cell is increased.

GATT: "Enhancement on discovery in inter-frequency/ inter-PLMN scenario", 3GPP DRAFT; R2-151239, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, val. RAN WG2, no. Bratislava, Slovakia; 20150420- 20150424 10 April 2015 relates to enhancement on discovery in inter-frequency/ inter-PLMN scenario. US 8,839,362 relates to method and apparatus for managing transmit power for device-to-device communication. SAMSUNG: "Resource Allocation for Discovery Transmission in Non Serving Carrier and Scell", 3GPP DRAFT; R2-151203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, val. RAN WG2, no. Bratislava, Slovakia; 20150420- 20150424 10 April 2015 relates to resource allocation for discovery transmission in non serving carrier and scell. SONY: "D2D discovery in the presence of multiple carriers and PLMNs", 3GPP DRAFT; R2-151082 D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS EDEX; FRANCE, val. RAN WG2, no. Bratislava, Slovakia; 20150420- 20150424 10 April 2015 relates to D2D discovery in the presence of multiple carriers and PLMNs.

### SUMMARY

Aspects of the present disclosure provide a D2D unicast resource allocation method and user equipment, so as to resolve a problem of increased load of an existing primary cell.

To achieve the foregoing objective, the following technical solutions are used in the aspects of the present disclosure:

In particular, the present disclosure provides a method according to claim 1 and user equipment according to claim 8. Further technical features of each of these aspects are defined in the respective dependent claims.

As may be seen from above, the aspects of the present disclosure provide a resource allocation method and user equipment. A base station of a primary cell or a serving cell of user equipment provides a D2D communication resource of a first cell to the user equipment, where the first cell is a secondary cell or a non-serving cell. In this way, the user equipment may use the D2D communication resource of the secondary cell or the non-serving cell to perform communication, thereby avoiding a problem of increased load of the primary cell of the user equipment caused when a communication resource of the user equipment is limited in the primary cell or the serving cell of the user equipment in the prior art.

### BRIEF DESCRIPTION OF DRAWINGS

To describe the technical solutions in the aspects of the present disclosure or in the prior art more clearly, the following briefly describes the accompanying drawings required for describing the aspects or the prior art. Apparently, the accompanying drawings in the following description show merely some aspects of the present disclosure, and a person of ordinary skill in the art may still derive other drawings from these accompanying drawings without creative efforts.
FIG. 1 is a flowchart of a resource allocation method according to an aspect of the present disclosure;
FIG. 2 is a flowchart of a resource allocation method according to an aspect of the present disclosure;
FIG. 3 is a flowchart of a resource allocation method according to an aspect of the present disclosure;
FIG. 4 is a flowchart of a resource allocation method according to an aspect of the present disclosure;
FIG. 5 is a flowchart of a resource allocation method according to an aspect of the present disclosure;
FIG. 6 is a flowchart of a resource allocation method according to an aspect of the present disclosure;
FIG. 7 is a flowchart of a resource allocation method according to an aspect of the present disclosure;
FIG. 8 is a flowchart of a resource allocation method according to an aspect of the present disclosure;
FIG. 9 is a flowchart of a communications method according to an aspect of the present disclosure;
FIG. 10 is a flowchart of a communications method according to an aspect of the present disclosure;
FIG. 11 is a flowchart of a communications method according to an aspect of the present disclosure;
FIG. 12 is a flowchart of a communications method according to an aspect of the present disclosure;
FIG. 13 is a structural diagram of a base station according to an aspect of the present disclosure;
FIG. 13A is a structural diagram of a base station according to an aspect of the present disclosure;
FIG. 14 is a structural diagram of a base station according to an aspect of the present disclosure;
FIG. 14A is a structural diagram of a base station according to an aspect of the present disclosure;
FIG. 15 is a structural diagram of user equipment according to an aspect of the present disclosure;
FIG. 16 is a structural diagram of a resource allocation system according to an aspect of the present disclosure;
FIG. 17 is a structural diagram of a base station according to an aspect of the present disclosure;
FIG. 17A is a structural diagram of a base station according to an aspect of the present disclosure;
FIG. 18 is a structural diagram of user equipment according to an aspect of the present disclosure;
FIG. 19 is a structural diagram of a resource allocation system according to an aspect of the present disclosure;
FIG. 20 is a structural diagram of a base station according to an aspect of the present disclosure;
FIG. 20A is a structural diagram of a base station according to an aspect of the present disclosure;
FIG. 21 is a structural diagram of a base station according to an aspect of the present disclosure;
FIG. 21A is a structural diagram of a base station according to an aspect of the present disclosure;
FIG. 22 is a structural diagram of a resource allocation system according to an aspect of the present disclosure;
FIG. 23 is a structural diagram of a base station according to an aspect of the present disclosure;
FIG. 24 is a structural diagram of a base station according to an aspect of the present disclosure;
FIG. 25 is a structural diagram of user equipment according to an aspect of the present disclosure;
FIG. 26 is a structural diagram of a resource allocation system according to an aspect of the present disclosure;
FIG. 27 is a structural diagram of a base station according to an aspect of the present disclosure;
FIG. 28 is a structural diagram of a base station according to an aspect of the present disclosure;
FIG. 29 is a structural diagram of a resource allocation system according to an aspect of the present disclosure;
FIG. 30 is a structural diagram of a base station according to an aspect of the present disclosure;
FIG. 31 is a structural diagram of a base station according to an aspect of the present disclosure; and
FIG. 32 is a structural diagram of a resource allocation system according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are merely some but not all of the aspects of the present disclosure. All other aspects obtained by a person of ordinary skill in the art based on the aspects of the present disclosure without creative efforts shall fall within the protection scope of the present disclosure.

It should be noted that in the aspects of the present disclosure, for user equipment (User Equipment, UE) in an idle (idle) state, a serving cell is a cell on which the user equipment camps. For user equipment in a connected state, a serving cell is a cell that provides a service to the user equipment. For example, a primary cell or a secondary cell is a serving cell of UE.

Specifically, the primary cell may refer to that when UE is configured to use carrier aggregation (CA), there is only one RRC connection between the UE and a network. At RRC connection establishment/re-establishment/handover, one serving cell of the UE provides NAS mobility information to the UE. At RRC connection re-establishment/handover, one serving cell provides security input to the UE. This serving cell is the primary cell of the UE. (When CA is configured, the UE only has one RRC connection with the network. At RRC connection establishment/re-establishment/handover, one serving cell provides the NAS mobility information (e.g., TAI), and at RRC connection re-establishment/handover, one serving cell provides the security input. This cell is referred to as the Primary Cell (PCell).). Alternatively:

Specifically, the primary cell may refer to that in a multi-carrier scenario, at RRC connection establishment/re-establishment/handover, one serving cell of the UE provides NAS mobility information to the UE. At RRC connection re-establishment/handover, one serving cell provides security input to the UE. This serving cell is the primary cell of the UE.

Specifically, the primary cell may refer to a cell of a master base station (Pcell) in a scenario of dual connectivity. The master base station (for example, a Master eNB) may refer to a base station connected to an S1-MME interface in a scenario of dual connectivity (Master eNB: in dual connectivity, the eNB which terminates at least S1-MME).

Specifically, the primary cell may refer to that when a secondary base station secondary base station of the user equipment has multiple cells that provide a service to a terminal, one of the cells is the primary cell. The primary cell provides a PUCCH or provides an uplink transmission resource to the UE. Certainly, the primary cell may further have another definition. This is not limited in the present disclosure.

Specifically, the secondary cell (Secondary cell) may refer to a cell that provides provides a service to the UE, but the cell is not the primary cell. Alternatively, the secondary cell (Secondary cell) is a cell that provides data transmission to the user equipment; or a cell that provides DRB transmission to the user equipment; or a cell that provides transmission of information on a PDSCH to the user equipment.

Specifically, the secondary base station may refer to a base station of the secondary cell of the UE, or a base station that provides an additional resource to the UE in a scenario of dual connectivity, but is not the master base station (Secondary eNB: in dual connectivity, the eNB that is providing additional radio resources for the UE but is not the Master eNB.)

Specifically, a non-serving cell may be a cell that provides no service to the user equipment, or a cell that is not connected to the user equipment.

In all the aspects of the present disclosure, the primary cell may be equivalent to a primary carrier. The secondary cell may be equivalent to a secondary carrier. The non-serving cell may be equivalent to a non-serving carrier. A cell frequency is a center frequency used by a cell. The cell frequency is equivalent to a carrier frequency. In the aspects of the present disclosure, a cell is mainly used as an example to describe the inventive content. All cells in the present disclosure may be equivalent to carriers. For example, the non-serving cell is equivalent to a non-serving carrier. Details are no longer described herein.

In all the aspects of the present disclosure, "performing D2D communication in a first cell" may be equivalent to performing D2D communication by using a resource of the first cell. Details are no longer described herein.

### Aspect 1

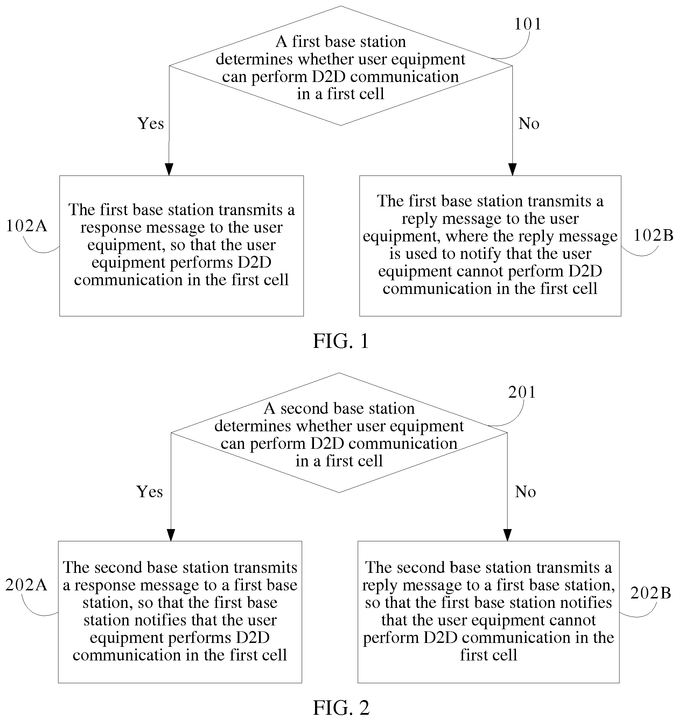

FIG. 1 is a flowchart of a resource allocation method according to an aspect of the present disclosure. As shown in FIG. 1, the method may include the following steps.

101: A first base station determines whether user equipment can perform D2D communication in a first cell; and if the user equipment can perform D2D communication in the first cell, the process turns to step 102A; or if the user equipment cannot perform D2D communication in the first cell, the process turns to step 102B.

The first base station may be a first base station of a second cell, and the second cell may be a primary cell or a serving cell of the user equipment.

Whether the user equipment can perform D2D communication in the first cell may refer to whether the user equipment is authorized to perform D2D communication in the first cell. The first cell may be a secondary cell or a non-serving cell of the user equipment.

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Optionally, the first base station may determine, by using any manner or multiple manners of (1), (2), or (3) in the following, whether the user equipment can perform D2D communication in the first cell.
(1) The first base station determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the first base station may determine, according to first cell information and PLMN (Public Land Mobile Network, public land mobile network) information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI (Evolved Cell Global Identifier, e.g., the globally unique identity of a cell in E-UTRA) of the first cell, a PLMN identity corresponding to the first cell or a physical layer identity PCI (physical layer identity) of the first cell, or a frequency of the first cell.

The PLMN information is used to provide information on an authorization status of the PLMN, where the authorized PLMN is used by the user equipment to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.
(2) The first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, before the third manner is performed, the first base station further needs to receive a neighbor cell measurement reported by the user equipment, where the neighbor cell measurement report includes the signal quality that is measured by the user equipment and that is in the first cell.

102A: The first base station transmits a response message to the user equipment, so that the user equipment performs D2D communication in the first cell.

The response message is used to provide a D2D communication resource in the first cell to the user equipment, and may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

102B: The first base station transmits a reply message to the user equipment, where the reply message is used to notify that the user equipment cannot perform D2D communication in the first cell.

Optionally, the first cell and the second cell may belong to a same PLMN or different PLMNs.

Optionally, the first base station is a base station of the second cell and the first cell.

Optionally, the first base station is a base station of the second cell, and a second base station is a base station of the first cell.

Correspondingly, in addition to that the first base station actively provides the D2D communication resource to the user equipment by using the foregoing method, the first base station may further perform the foregoing process at the request of the user equipment. Details are as follows:
receiving, by the first base station, a first request message transmitted by the user equipment, where the first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Optionally, when the base station of the first cell is the second base station, and before the first base station receives the request message transmitted by the user equipment, or if the user equipment does not transmit a request message but actively provides a D2D communication resource to a device, the first base station needs to retrieve information about some available resources from the first base station or the second base station in advance, so as to allocate a resource to user equipment that needs a D2D communication resource. Specifically:

The first base station transmits a second request message to the second base station, where the request message is used to request a resource for performing D2D communication or request to provide a cell resource that is of the first base station and that is used to perform D2D communication, and the resource may be used for D2D communication.

The first base station receives a first response message transmitted by the second base station, where the first response message provides a resource of a cell of the second base station, and the resource is used for D2D communication; or the first response message includes a resource that is in the first cell and that is used for D2D communication.

Alternatively, the first base station receives a first reply message transmitted by the second base station, where the first reply message is used to represent that no resource is to be provided for D2D communication.

In addition, optionally, when the base station of the first cell is the second base station, the first base station may further skip, after receiving the first request message transmitted by the user equipment, performing the foregoing steps, but instead forwards the request message to the second base station of the first cell. The second base station of the first cell determines a D2D communication resource. After receiving a determining result of the second base station, the first base station transmits a corresponding message to the user equipment. Details are as follows:
transmitting, by the first base station, a third request message to the second base station, where the third request message is used to request, for the user equipment, a resource for performing D2D communication; and
receiving, by the first base station, a response message sent by the second base station, where the response message includes information about a resource for the user equipment to perform D2D communication in the first cell, and the response message represents that the user equipment can perform D2D communication in the first cell; or
receiving, by the first base station, a reply message sent by the second base station, where the reply message does not include information about a resource for the user equipment of the first cell to perform D2D communication in the first cell, and represent that the user equipment cannot perform D2D communication in the first cell.

As may be seen from above, this aspect of the present disclosure provides a resource allocation method. A base station of a primary cell or a serving cell of user equipment provides a D2D communication resource of a first cell to the user equipment, where the first cell is a secondary cell or a non-serving cell. In this way, the user equipment may use the D2D communication resource of the secondary cell or the non-serving cell to perform communication, thereby avoiding a problem of increased load of the primary cell of the user equipment caused when a communication resource of the user equipment is limited in the primary cell or the serving cell of the user equipment in the prior art.

In all the aspects of the present disclosure, the first cell and the second cell may belong to different PLMNs or may belong to a same PLMN. This is not limited in the present disclosure. The base station of the first cell and the base station of the second cell may belong to different PLMNs or may belong to a same PLMN. Details are not described.

### Aspect 2

FIG. 2 is a flowchart of a resource allocation method according to an aspect of the present disclosure. As shown in FIG. 2, the method may include the following steps.

201: A second base station determines whether user equipment can perform D2D communication in a first cell; and if the user equipment can perform D2D communication in the first cell, the process turns to 202A; or if the user equipment cannot perform D2D communication in the first cell, the process turns to 202B.

The first cell is a secondary cell or a non-serving cell of the user equipment, and the second base station is a base station of the first cell.

Specifically, the secondary cell (Secondary cell) may refer to a cell that provides provides a service to the UE, but the cell is not a primary cell. Alternatively, the secondary cell (Secondary cell) is a cell that provides data transmission to the user equipment; or a cell that provides DRB transmission to the user equipment; or a cell that provides transmission of information on a PDSCH to the user equipment.

Specifically, the non-serving cell may be a cell that provides no service to the user equipment, or a cell that is not connected to the user equipment.

The D2D communication may be equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Optionally, the second base station may determine, by using any manner or multiple manners of (1), (2), or (3) in the following, whether the user equipment can perform D2D communication in the first cell.
(1) The second base station determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the second base station may determine, according to first cell information and PLMN information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI of the first cell, a PLMN identity corresponding to the first cell or a physical layer identity PCI of the first cell, or a frequency of the first cell.

The PLMN information is used to provide information on an authorization status of the PLMN, where the authorized PLMN is used for the user equipment to perform D2D communication (provides information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN.
(2) A first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, before the third manner is performed, the first base station further needs to receive a neighbor cell measurement reported by the user equipment, where the neighbor cell measurement report includes the signal quality that is measured by the user equipment and that is in the first cell.

202A: The second base station transmits a response message to the first base station, so that the first base station notifies that the user equipment performs D2D communication in the first cell.

The response message is used to provide a D2D communication resource of the first cell to the user equipment, provide a D2D communication resource in the first cell to the user equipment, and may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

The first base station is a base station of the second cell of the user equipment. The second cell is a primary cell or a serving cell of the user equipment.

202B: The second base station transmits a reply message to the first base station, so that the first base station notifies that the user equipment cannot perform D2D communication in the first cell.

Optionally, the method may further include:
receiving, by the first base station, a first request message transmitted by the second base station, where the first request message is used to request to provide, to the user equipment, a resource for performing D2D communication, where
the first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, optionally, the second base station may further provide resource information to the first base station in advance, so that the first base station provides a D2D communication resource to user equipment that needs a communication resource, which is specifically:
receiving, by the second base station, a second request message transmitted by the first base station, where the request message is used to request a resource for performing D2D communication or request to provide a cell resource that is of the base station and that is used for D2D communication, and the resource may be used for D2D communication; and
transmitting, by the second base station, a response message to the first base station, where the response message provides a resource of a cell of the second base station, and the resource is used for D2D communication; or the response message includes a resource that is in the first cell and that is used for D2D communication; or
transmitting, by the second base station, a reply message to the first base station, where the reply message is used to represent that no resource is to be provided for D2D communication.

As may be seen from above, this aspect of the present disclosure provides a resource allocation method. A base station of a secondary cell or a non-serving cell of user equipment provides a D2D communication resource of a first cell to the user equipment, where the first cell is the secondary cell or the non-serving cell. In this way, the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 3

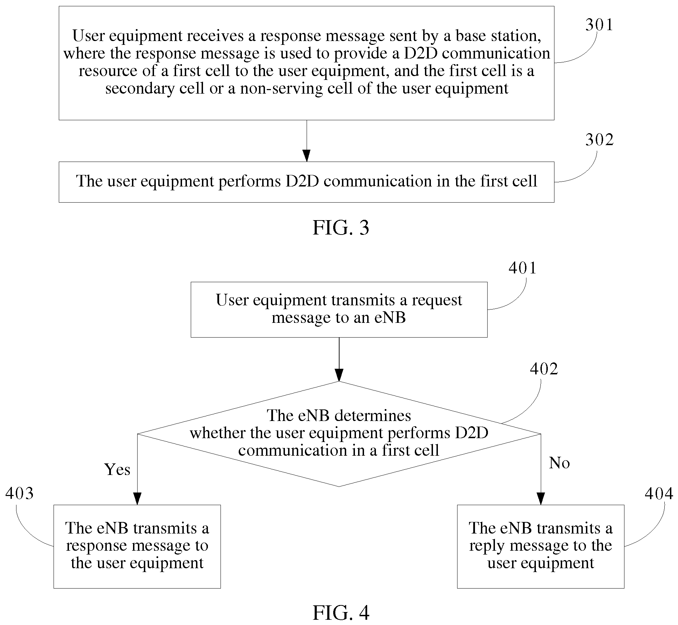

FIG. 3 is a flowchart of a resource allocation method according to an aspect of the present disclosure. As shown in FIG. 3, the method may include the following steps.

301: User equipment receives a response message sent by a base station, where the response message is used to provide a D2D communication resource of a first cell to the user equipment, and the first cell is a secondary cell or a non-serving cell of the user equipment.

The secondary cell (for example, (Secondary cell)) may refer to a cell that provides provides a service to the UE, but the cell is not a primary cell. Alternatively, the secondary cell (Secondary cell) is a cell that provides data transmission to the user equipment; or a cell that provides DRB transmission to the user equipment; or a cell that provides transmission of information on a PDSCH to the user equipment.

Specifically, the non-serving cell may be a cell that provides no service to the user equipment, or a cell that is not connected to the user equipment.

The D2D communication is equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

The response message may include: one or more of a cell identifier of the first cell, a physical cell identifier PCI of the first cell and a frequency of the first cell, or an identity of a PLMN to which the first cell belongs; and/or a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

The response message further includes:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.
the response message further includes a cell index Scellindex, where the cell index is used to indicate the first cell.

302: The user equipment performs D2D communication in the first cell.

Optionally, before step 301, the method further includes:
transmitting, by the user equipment, a request message to the base station, where the request message is used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication in the candidate cell, where M is a positive integer.

The candidate cell may be a cell in which the user equipment wants to perform D2D communication. Preferably, the candidate cell may be the first cell.

Optionally, to enable the base station to provide, to the user equipment, the D2D communication resource of the first cell, the method further includes:
reporting, by the user equipment, a neighbor cell measurement report to the base station, so that the base station determines, according to the neighbor cell measurement report, that the user equipment can perform D2D communication in the first cell, where the neighbor cell measurement report includes the signal quality that is measured by the user equipment and that is in the first cell.

Optionally, in this aspect, the base station may be a common base station of the second cell and the first cell, where the second cell is a serving cell or a primary cell of the user equipment, and the first cell and the second cell belong to a same PLMN or different PLMNs; or
the base station may also be only a base station of the second cell, and the second cell is a serving cell or a primary cell of the user equipment.

As may be seen from above, this aspect of the present disclosure provides a resource allocation method. User equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

The foregoing method is described below by using specific Aspect 4, Aspect 5, and Aspect 6:

### Aspect 4

FIG. 4 is a flowchart of a resource allocation method according to an aspect of the present disclosure. As shown in FIG. 4, a eNB is a base station of a second cell. A second base station may be a master base station or a serving base station of user equipment. The method may include the following steps.

401: The user equipment transmits a request message to the eNB.

The request message is used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be a first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Preferably, the candidate cell may be the first cell. The first cell may be a secondary cell or a non-serving cell of the user equipment. The eNB is an eNB of both the first cell and the second cell. The first cell and the second cell may belong to a same PLMN or different PLMNs.

402: The eNB determines whether the user equipment performs D2D communication in the first cell; and if the user equipment performs D2D communication in the first cell, the process turns to step 403; or if the user equipment does not perform D2D communication in the first cell, the process turns to step 404.

It should be noted that, step 3402 and step 101 in Aspect 1 have a specific same process. Details are no longer described herein.

403: The eNB transmits a response message to the user equipment.

The response message is used to provide a D2D communication resource in the first cell to the user equipment, and may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

404: The eNB transmits a reply message to the user equipment.

The reply message is used to notify that the user equipment cannot perform D2D communication in the first cell.

As may be seen from above, this aspect of the present disclosure provides a resource allocation method. User equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 5

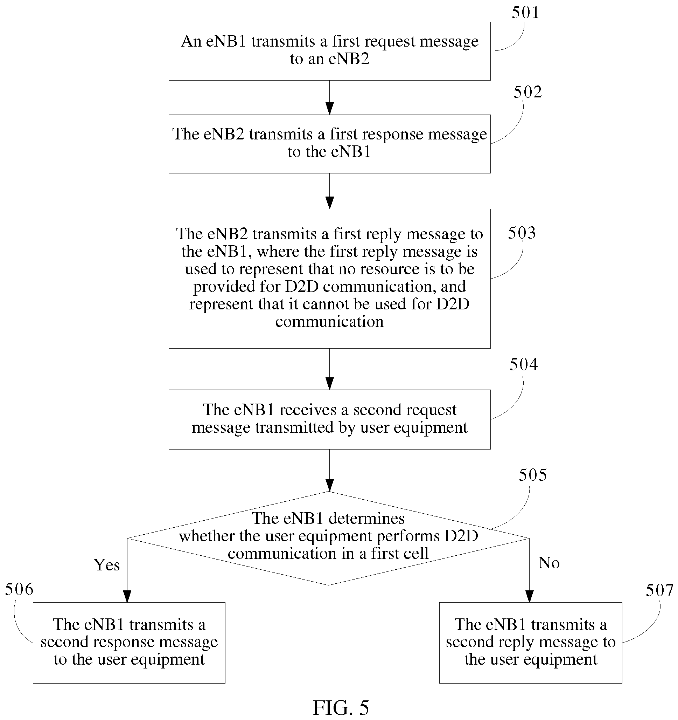

FIG. 5 is a flowchart of a resource allocation method according to an aspect of the present disclosure. As shown in FIG. 5, an eNB1 is a base station of a second cell. A second base station may be a master base station or a serving base station of user equipment. An eNB2 is a base station of a first cell. The first cell may be a cell of a secondary base station or a non-serving base station of the user equipment. The method may include the following steps.

501: The eNB1 transmits a first request message to the eNB2.

The first request message is used to: where the request message is used to request a resource for performing D2D communication or request to provide a cell resource that is of the base station and that is used for D2D communication, and the resource may be used for D2D communication.

502: The eNB2 transmits a first response message to the eNB1.

The first response message provides a resource of a cell of the eNB2, and the resource is used for D2D communication; or the first response message includes a resource that is in the first cell and that is used for D2D communication.

503: The eNB2 transmits a first reply message to the eNB1, where the first reply message is used to represent that no resource is to be provided for D2D communication, and represent that it cannot be used for D2D communication.

504: The eNB1 receives a second request message transmitted by the user equipment.

The second request message is used to used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Preferably, the candidate cell may be the first cell, and the first cell may be a secondary cell or a non-serving cell of the user equipment. The eNB is an eNB of both the first cell and the second cell. The first cell and the second cell may belong to a same PLMN or different PLMNs.

There may be one or more candidate cells.

There may be one or more first cells.

505: The eNB1 determines whether the user equipment performs D2D communication in the first cell; and if the user equipment performs D2D communication in the first cell, the process turns to step 506; or if the user equipment does not perform D2D communication in the first cell, the process turns to step 507.

It should be noted that, step 505 and step 101 in Aspect 1 have a specific same process, Details are no longer described herein.

506: The eNB1 transmits a second response message to the user equipment.

The second response message is used to provide a D2D communication resource in the first cell to the user equipment, and may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell is a dedicated resource configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The second response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

507: The eNB1 transmits a second reply message to the user equipment.

The second reply message is used to notify that the user equipment cannot perform D2D communication in the first cell.

As may be seen from above, this aspect of the present disclosure provides a resource allocation method. User equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 6

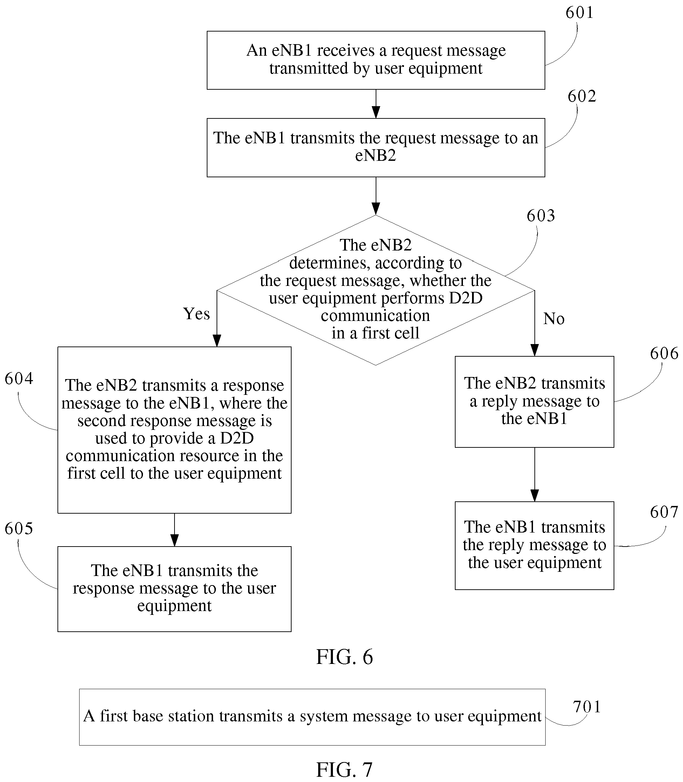

FIG. 6 is a flowchart of a resource allocation method according to an aspect of the present disclosure. As shown in FIG. 6, an eNB1 is a base station of a second cell. A second base station may be a master base station or a serving base station of user equipment. An eNB2 is a base station of a first cell. The first cell may be a cell of a secondary base station or a non-serving base station of the user equipment. The method may include the following steps.

601: The eNB1 receives a request message transmitted by the user equipment.

The request message is used to used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Preferably, the candidate cell may be the first cell. The first cell may be a secondary cell or a non-serving cell of the user equipment. The eNB is an eNB of both the first cell and the second cell. The first cell and the second cell may belong to a same PLMN or different PLMNs.

602: The eNB1 transmits the request message to the eNB2.

603: The eNB2 determines, according to the request message, whether the user equipment performs D2D communication in the first cell; and if the user equipment performs D2D communication in the first cell, the process turns to steps 604 and 605; or if the user equipment does not perform D2D communication in the first cell, the process turns to steps 606 and 607.

It should be noted that step 604 and step 201 in Aspect 2 have a specific same process. Details are no longer described herein.

604: The eNB2 transmits a response message to the eNB1, where the second response message is used to provide a D2D communication resource in the first cell to the user equipment, and may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

605: The eNB 1 transmits the response message to the user equipment.

606: The eNB2 transmits a reply message to the eNB1.

The second reply message is used to notify that the user equipment cannot perform D2D communication in the first cell.

607: The eNB1 transmits the reply message to the user equipment.

As may be seen from above, this aspect of the present disclosure provides a resource allocation method. User equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

In addition, in addition to the solutions that are provided in Aspect 1 to Aspect 6 and in which a base station allocates an available D2D communication resource to user equipment, the present disclosure further provides a solution in which user equipment autonomously listens to an available D2D communication resource. Details are described in Aspect 7 below.

### Aspect 7

FIG. 7 is a flowchart of another resource allocation method provided in an aspect of the present disclosure. As shown in FIG. 7, the method may include:
701: A first base station transmits a system message to user equipment.

The system message includes a resource configuration of transmitting or listening to a discovery message in a first cell, so that the user equipment transmits or listens to a discovery message in the first cell according to the resource configuration.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

The first cell is a secondary cell or a non-serving cell of the user equipment. The first base station may be a base station of a second cell or the first cell. The second cell may be a primary cell or a serving cell of the user equipment.

Optionally, the transmitting, by a first base station, a system message to user equipment may include:
transmitting, by the first base station, the system message to the user equipment in the second cell; or
transmitting, by the first base station, the system to the user equipment in the first cell.

Optionally, when the base station is the base station of the second cell of the user equipment, and before the transmitting, by a first base station, a system message to user equipment, a resource configuration a resource configuration of transmitting or listening to a discovery message in the first cell may be obtained from another node (for example, another base station, or an OAM). Details are as follows:
receiving, by the first base station, a resource configuration message sent by a second base station, where the resource configuration message includes a resource configuration of receiving or transmitting a D2D discovery message in the first cell, and the second base station is a base station of the first cell.

The first base station is a first base station of the second cell.

As may be seen from above, this aspect of the present disclosure provides a resource allocation method. A first base station transmits a system message, so that user equipment transmits or listens to a discovery message in a first cell, the first cell is a secondary cell or a non-serving cell of the user equipment, thereby avoiding a problem of increased load of a primary cell of the user equipment caused when a communication resource of the user equipment is limited in the primary cell in the prior art.

### Aspect 8

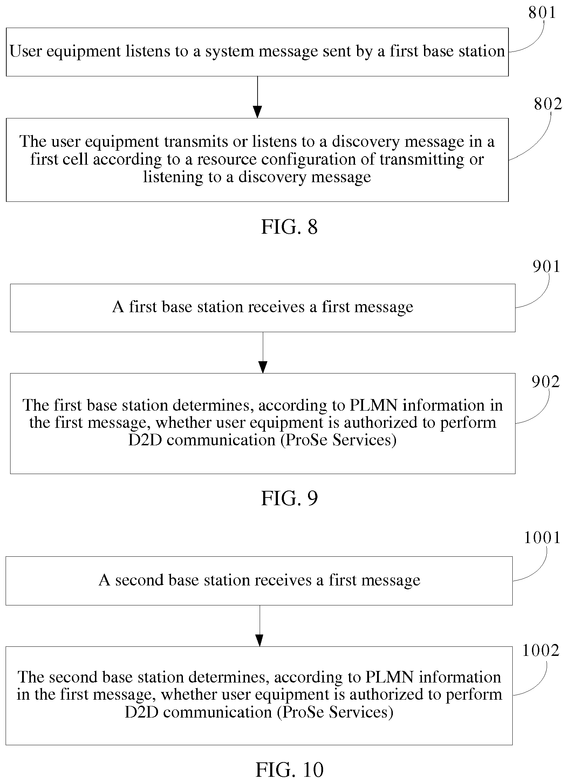

FIG. 8 is a flowchart of another resource allocation method provided in an aspect of the present disclosure. As shown in FIG. 8, the method may include:
801: User equipment listens to a system message sent by a first base station.

The system message includes a resource configuration of transmitting or listening to a discovery message in a first cell. The first cell is a secondary cell or a non-serving cell of the user equipment.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

802: The user equipment transmits or listens to a discovery message in the first cell according to the resource configuration of transmitting or listening to a discovery message.

Optionally, the transmitting or listening to a discovery message in the first cell may include:
transmitting or listening to, by the user equipment, a discovery message in the authorized first cell; or
after it is determined that the user equipment is authorized to transmit or listen to a discovery message in the first cell, transmitting or listening to a discovery message in the first cell.

Optionally, the listening to, by the user equipment, a system message may include:
listening to, by the user equipment, the system message in the first cell or the second cell, where the second cell is a primary cell or a serving cell of the user equipment.

As may be seen from above, this aspect of the present disclosure provides a resource allocation method. User equipment listens to a system message, and transmits or listens to a discovery message in a first cell indicated by the system message, where the first cell is a secondary cell or a non-serving cell of the user equipment, thereby avoiding a problem of increased load of a primary cell of the user equipment caused when a communication resource of the user equipment is limited in the primary cell in the prior art.

### Aspect 9

FIG. 9 is a flowchart of a communications method provided in an aspect of the present disclosure. As shown in FIG. 9, the method may include:
901: A first base station receives a first message.

The first message includes PLMN information. The first message is used to provide information on an authorization status of the PLMN, where the authorized PLMN is used for user equipment to perform D2D communication (provides information on the authorization status of PLMN for ProSe services); or is used to indicate in which PLMNs the user equipment is authorized to perform D2D communication (Indicates in which PLMN the UE is authorized for ProSe services).

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

Optionally, the first base station may receive the first message transmitted by a mobile management entity MME or a third base station of the user equipment. The third base station may be a secondary base station or a non-serving base station of the user equipment.

902: The first base station determines, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or a secondary cell or a serving cell or a primary cell of the user equipment.

Optionally, the first base station may receive a first cell message, and
determine, according to PLMN information in the first message and the first cell information, whether the user equipment is authorized to perform D2D communication (ProSe Services).

The first cell message includes at least one of the following: an identifier ECGI of the first cell, a PLMN identity corresponding to the first cell, a physical layer identity PCI of the first cell or a frequency of the first cell.

Specifically, the first base station determines a PLMN identity corresponding to the first cell according to the first cell information; and
if an authorized PLMN identity provided in the PLMN information includes a PLMN identity corresponding to the first cell, determines that the UE is authorized to perform D2D communication in the first cell, or determines that the first cell is a cell in which the user equipment can be authorized to perform D2D communication; or
if an authorized PLMN identity provided in the PLMN information does not include a PLMN identity corresponding to the first cell, determines that the UE is not authorized to perform D2D communication in the first cell, or determines that the UE is not a cell in which the user equipment can be authorized to perform D2D communication.

Optionally, the first base station may receive the first cell message by using the following manner:
receiving, by the first base station, the request message transmitted by the user equipment, where the request message is used to request to perform D2D communication in the first cell, and the request message includes the first cell information; or
receiving, by the first base station, a first message transmitted by a mobile management entity MME or the third base station of the user equipment, where the first message includes the first cell information.

Optionally, when the first base station determines that the user equipment can perform D2D communication in the first cell, the method may further include:
transmitting, by the first base station, a response message to the user equipment, so that the user equipment performs D2D communication in the first cell, where the response message is used to provide a resource for D2D communication to the user equipment; or
when the first base station determines that the user equipment cannot perform D2D communication in the first cell, transmitting, by the first base station, a reply message to the user equipment, to notify that the user equipment cannot perform D2D communication in the first cell.

Optionally, after receiving the first message, the first base station may further skip determining a D2D resource that can be used to perform communication, but instead, another base station determines the D2D resource. Specifically, the method further includes:
transmitting, by the first base station, a second message to a second base station, where the second message includes PLMN information, the second message is used to provide information on an authorization status of the PLMN to the second base station, where the authorized PLMN is used for the user terminal to perform D2D communication, or used to indicate in which PLMNs the UE is authorized to perform D2D communication.

The second base station is a base station of the first cell. The first cell is the secondary cell or the non-serving cell of the user equipment.

Moreover, to use the second base station to determine whether a communication resource is authorized, the second base station further needs the first cell information. Specifically, the method further includes:
transmitting, by the first base station, the first cell information to the second base station.

As may be seen from above, this aspect of the present disclosure provides a communications method. A first base station receives a first message, and determines, according to PLMN information in the first message, whether user equipment is authorized to perform D2D communication (ProSe Services). In this way, the user equipment may use a D2D communication resource of a secondary cell or the non-serving cell to perform communication, thereby avoiding a problem of increased load of a primary cell of the user equipment caused when a communication resource of the user equipment is limited in the primary cell or a serving cell of the user equipment in the prior art.

### Aspect 10

FIG. 10 is a flowchart of a communications method provided in an aspect of the present disclosure. As shown in FIG. 10, the method may include:
1001: A second base station receives a first message.

The first message includes PLMN information. The first message is used to provide information on an authorization status of the PLMN, where the authorized PLMN is used for user equipment to perform D2D communication; or is used to indicate in which PLMNs the user equipment is authorized to perform D2D communication.

Optionally, the second base station may receive the first message transmitted by a mobile management entity MME or a first base station of the user equipment. The first base station may be a base station of a second cell of the user equipment. The second cell may be a primary cell or a serving cell of the user equipment.

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

1002: The second base station determines, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or the secondary cell or the serving cell or the primary cell of the user equipment.

Optionally, the second base station may first further receive the first cell information; and
determine, according to the PLMN information in the first message and the first cell information, whether the user equipment is authorized to perform D2D communication (ProSe Services).

The first cell information is used to determine a PLMN identity corresponding to the first cell. The PLMN identity includes at least one of the following: an identifier ECGI of the first cell (Evolved Cell Global Identifier, e.g., the globally unique identity of a cell in E-UTRA), a PLMN identity corresponding to the first cell or a physical layer identity PCI (physical layer identity) of the first cell, or a frequency of the first cell.

The PLMN information is used to provide information on an authorization status of the PLMN, where the authorized PLMN is used for the user terminal to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, PLMN(s) supported by the user terminal, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.

Specifically, the determining, by the second base station according to the PLMN information in the first message and the first cell information, whether the user equipment is authorized to perform D2D communication (ProSe Services) may include:
determining, by the first base station, a PLMN identity corresponding to the first cell according to the first cell information; and
if an authorized PLMN identity provided in the PLMN information includes a PLMN identity corresponding to the first cell, determining that the UE is authorized to perform D2D communication in the first cell, or determining that the first cell is a cell in which the user equipment can be authorized to perform D2D communication; or
if an authorized PLMN identity provided in the PLMN information does not include a PLMN identity corresponding to the first cell, determining that the UE is not authorized to perform D2D communication in the first cell, or determining that the UE is not a cell in which the user equipment can be authorized to perform D2D communication.

Optionally, the second base station may use the following method to receive the first cell message:
receiving, by the second base station, a second message transmitted by a third base station, where the second message includes the first cell information; or
receiving, by the second base station, a first message of the first base station or an MME, where the first message includes the first cell information.

Optionally, after determining whether the user equipment is authorized to perform D2D communication, the second base station makes a response. For example:
When determining that the UE is authorized to perform D2D communication in the first cell, the second base station transmits a response message.

When determining that the UE is not authorized to perform D2D communication in the first cell, the second base station transmits a reply message.

Specifically, the transmitting, by the second base station, a response message may include:
when the first cell information is transmitted by the MME, transmitting, by the second base station, the response message to the MME; or
when the first cell information is transmitted by the first base station, transmitting, by the second base station, the response message to the first base station; or
when the first cell information is transmitted by the third base station, transmitting, by the second base station, the response message to the first base station.

Specifically, the transmitting, by the second base station, a reply message may include:
when the first cell information is transmitted by the MME, transmitting, by the second base station, the reply message to the MME; or
when the first cell information is transmitted by the first base station, transmitting, by the second base station, the reply message to the first base station; or
when the first cell information is transmitted by the third base station, transmitting, by the second base station, the reply message to the third base station.

As may be seen from above, this aspect of the present disclosure provides a communications method. A second base station receives a first message; and determines, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

The foregoing method is described below by using specific Aspect 11 and Aspect 12.

### Aspect 11

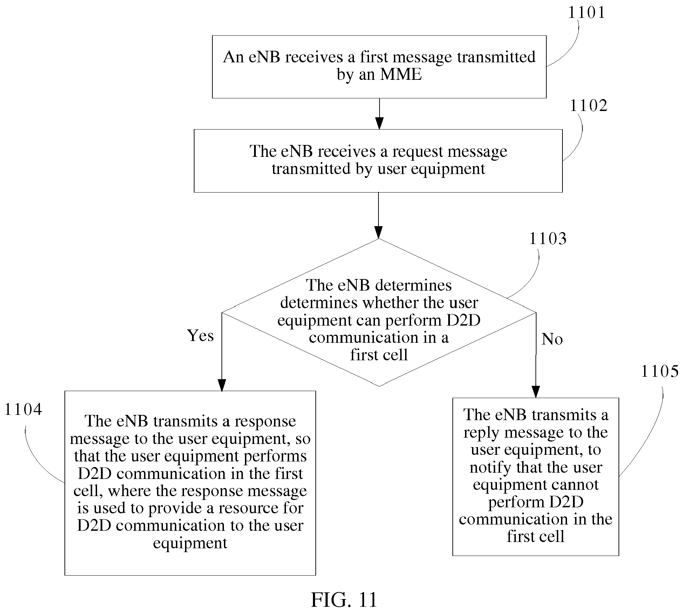

FIG. 11 is a flowchart of a communications method provided in an aspect of the present disclosure. As shown in FIG. 11, a eNB is a base station of a second cell. A second base station may be a master base station or a serving base station of user equipment. The method may include:
1101: The eNB receives a first message transmitted by an MME.

The first message includes PLMN information. The PLMN information is used to provide information on an authorization status of the PLMN, where the authorized PLMN is used for the user equipment to perform D2D communication (provides information on the authorization status of PLMN for ProSe services); or is used to indicate in which PLMNs the user equipment is authorized to perform D2D communication (Indicates in which PLMN the UE is authorized for ProSe services).

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

For example, the first message may be INITIAL CONTEXT SETUP REQUEST (an initial context setup request message), UE CONTEXT MODIFICATION REQUEST (a UE context modification request message), PATH SWITCH REQUEST ACKNOWLEDGE messages (a path switch request message) or a handover request message (an HO Request).

For the PLMN information (for example, referred to as a ProSe Authorized information element), the PLMN information is used to provide information on an authorization status of the PLMN, where the authorized PLMN is used for the user equipment to perform D2D communication (in English: Especially for UE, it provides information on the authorization status of PLMN for ProSe services.). For example, as shown in Table 1 below:

**Table 1**

| IE/Group Name | Presence | Range | IE type and reference | Semantics description |
|---|---|---|---|---|
| ProSe Direct Discovery D2D Discovery communication | O optional | | ENUMERATED (PLMN ID ...) | Indicates in which PLMN the UE is authorized for ProSe Direct Discovery Indicates in which PLMNs the UE is authorized to perform D2D Discovery |
| ProSe Direct Communication D2D Communication communication | O optional | | ENUMERATED (PLMN ID ...) | Indicates in which PLMN the UE is authorized for ProSe Direct Communication Indicates in which PLMNs the UE is authorized to perform D2D Communication communication |
| ProSe relay Communication (one to one) D2D relay communication (one-to-one) | O optional | | ENUMERATED (PLMN ID ...) | Indicates in which PLMN the UE is authorized for ProSe relay Communication Indicates in which PLMNs the UE is authorized to perform D2D relay communication |
| ProSe relay Communication (one to many) D2D relay communication (one-to-many) | O optional | | | Indicates in which PLMN the UE is authorized for ProSe relay Communication Indicates in which PLMNs the UE is authorized to perform D2D relay communication |

Specifically, Indicates in which PLMNs the UE is authorized to perform D2D Discovery (Indicates in which PLMN the UE is authorized for ProSe Direct Discovery) may include Indicates in which PLMNs the UE is authorized to transmit a D2D Discovery message and/or Indicates in which PLMNs the UE is authorized to listen to a D2D Discovery message.

Similarly, Indicates in which PLMNs the UE is authorized to perform D2D Communication communication (Indicates in which PLMN the UE is authorized for ProSe Direct Communication) may include Indicates in which PLMNs the UE is authorized to transmit a D2D Communication message, and/or Indicates in which PLMNs the UE is authorized to listen to a D2D Communication) message.

Similarly, Indicates in which PLMNs the UE is authorized to perform D2D relay communication (Indicates in which PLMN the UE is authorized for ProSe relay Communication) may include Indicates in which PLMNs the UE is authorized to transmit a D2D relay communication message, and/or Indicates in which PLMNs the UE is authorized to listen to a D2D relay communication message. The D2D relay communication includes a one-to-one mode and a one-to-many mode.

ENUMERATED (PLMN ID ...) represents enumeration of identities corresponding to authorized PLMNs. In addition, there is further a possible form to represent PLMN information, for example, as shown in Table 2 below:

**Table 2**

| IE/Group Name | Presence | Range | IE type and reference | Semantics description |
|---|---|---|---|---|
| ProSe Direct Discovery announcement | O | | ENUMERATED (PLMN ID ...) | Indicates in which PLMN the UE is authorized for ProSe Direct Discovery announcement |
| ProSe Direct Discovery monitor | O | | ENUMERATED (PLMN ID...) | Indicates in which PLMN the UE is authorized for ProSe Direct Discovery monitor |
| ProSe Direct Communication announcement | O | | ENUMERATED (PLMN ID ... ) | Indicates in which PLMN the UE is authorized for ProSe Direct Communication announcement |
| ProSe Direct Communication monitor | | | ENUMERATED (PLMN ID ...) | Indicates in which PLMN the UE is authorized for ProSe Direct Communication monitor |
| ProSe relay Communication announcement | O | | ENUMERATED (PLMN ID ...) | Indicates in which PLMN the UE is authorized for ProSe relay Communication announcement |
| ProSe relay Communication monitor | O | | ENUMERATED (PLMN ID ...) | Indicates in which PLMN the UE is authorized for ProSe relay Communication monitor |

There is further a possible implementation manner. For a PLMN supported by each UE, the PLMN and status information about whether the PLMN is authorized are provided. Transmission of a discovery message is used as an example. For each PLMN ID, there is a table below, that is, Table 3:

**Table 3**

| IE/Group Name | Presence | Range | IE type and reference | Semantics description |
|---|---|---|---|---|
| ProSe Direct Discovery announcement | O | | ENUMERATED (ture/false) | Indicates the UE is authorized for ProSe Direct Discovery announcement or not |

True represents Indicates the UE is authorized for ProSe Direct Discovery announcement, and false represents Indicates the UE is not authorized for ProSe Direct Discovery announcement. Therefore, for the PLMN ID1, the status is ture, representing that the UE is authorized to transmit a D2D discovery message in the PLMN.

1102: The eNB receives the request message transmitted by the user equipment.

The request message is used to request to perform D2D communication in a first cell. Optionally, the request message includes first cell information. The first cell information may be a cell identifier ECGI of the first cell or a PLMN identity. The base station is a base station of the first cell.

1103: The eNB determines determines whether the user equipment can perform D2D communication in the first cell or determines whether the first cell is a cell in which the user equipment can be authorized to perform D2D communication; and if the user equipment can perform D2D communication in the first cell or the first cell is a cell in which the user equipment can be authorized to perform D2D communication, the process turns to 1104; or if the user equipment cannot perform D2D communication in the first cell or the first cell is not a cell in which the user equipment can be authorized to perform D2D communication, the process turns to 1105.

Specifically, for example, a first base station determines a PLMN identity corresponding to the first cell according to the first cell information; and
if an authorized PLMN identity provided in the PLMN information includes a PLMN identity corresponding to the first cell, determines that the UE is authorized to perform D2D communication in the first cell, or determines that the first cell is a cell in which the user equipment can be authorized to perform D2D communication; or
if an authorized PLMN identity provided in the PLMN information does not include a PLMN identity corresponding to the first cell, determines that the UE is not authorized to perform D2D communication in the first cell, or determines that the UE is not a cell in which the user equipment can be authorized to perform D2D communication.

1104: The eNB transmits a response message to the user equipment, so that the user equipment performs D2D communication in the first cell, where the response message is used to provide a resource for D2D communication to the user equipment.

1105: The eNB transmits a reply message to the user equipment, to notify that the user equipment cannot perform D2D communication in the first cell.

The foregoing eNB may receive the request message of the user equipment in the second cell, and the second cell is a serving cell or a primary cell of the user equipment. The eNB is a base station of the first cell and the second cell. That is, the case is that the first cell and the second cell belong to a same base station.

In the foregoing aspect, step 1101 may further be that the eNB receives a first message transmitted by another base station (for example, a third base station). This is not limited in the present disclosure.

As may be seen from above, this aspect of the present disclosure provides a communications method. An eNB receives a first message; and determines, according to the PLMN information in the first message, whether user equipment is authorized to perform D2D communication (ProSe Services), so that the user equipment may use a D2D communication resource of a secondary cell or a non-serving cell to perform communication, thereby avoiding a problem of increased load of a primary cell of the user equipment caused when a communication resource of the user equipment is limited in the primary cell in the prior art.

### Aspect 12

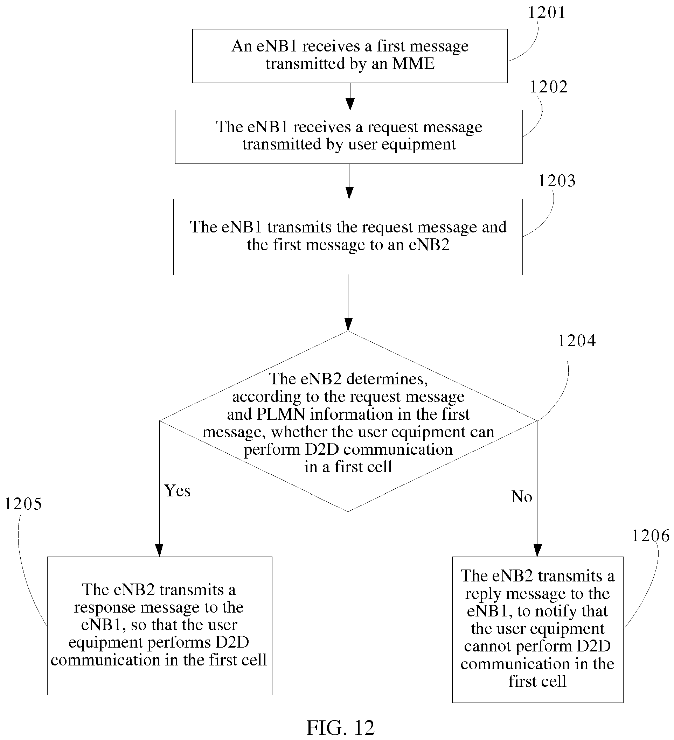

FIG. 12 is a flowchart of a communications method provided in an aspect of the present disclosure. As shown in FIG. 12, an eNB1 is a base station of a second cell. A second base station may be a master base station or a serving base station of user equipment. An eNB2 is a base station of a first cell. The first cell may be a cell of a secondary base station or a non-serving base station of the user equipment. The method may include:
1201: The eNB1 receives a first message transmitted by an MME.

The first message includes PLMN information. The first message is used to provide information on an authorization status of the PLMN, where the authorized PLMN is used for the user equipment to perform D2D communication (provides information on the authorization status of PLMN for ProSe services); or is used to indicate in which PLMNs the user equipment is authorized to perform D2D communication (Indicates in which PLMN the UE is authorized for ProSe services).

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

1202: The eNB1 receives the request message transmitted by the user equipment.

The request message is used to request to perform D2D communication in the first cell. The request message includes a cell identifier ECGI of the first cell or a PLMN identity. The eNB1 is the base station of the second cell. The foregoing eNB1 may receive the request message of the user equipment in the second cell. The second cell is a serving cell or a primary cell of the user equipment. The eNB1 is the base station of the second cell. The eNB2 is the base station of the first cell. The first cell is a non-serving base station or a secondary base station of the UE. That is, the case is that the first cell and the second cell belong to different base stations.

1203: The eNB1 transmits the request message and the first message to the eNB2.

1204: The eNB2 determines, according to the request message and the PLMN information in the first message, whether the user equipment can perform D2D communication in the first cell; and if the user equipment can perform D2D communication in the first cell, the process turns to 1205; or if the user equipment cannot perform D2D communication in the first cell, the process turns to 1206.

Specifically, for example, the eNB2 determines a PLMN identity corresponding to the first cell according to a first cell information; and
if an authorized PLMN identity provided in the PLMN information includes a PLMN identity corresponding to the first cell, determines that the UE is authorized to perform D2D communication in the first cell, or determines that the first cell is a cell in which the user equipment can be authorized to perform D2D communication; or
if an authorized PLMN identity provided in the PLMN information does not include a PLMN identity corresponding to the first cell, determines that the UE is not authorized to perform D2D communication in the first cell, or determines that the UE is not a cell in which the user equipment can be authorized to perform D2D communication.

1205: The eNB2 transmits a response message to the eNB1, so that the user equipment performs D2D communication in the first cell.

The response message is used to provide a resource for D2D communication to the user equipment.

1206: The eNB2 transmits a reply message to the eNB1, to notify that the user equipment cannot perform D2D communication in the first cell.

As may be seen from above, this aspect of the present disclosure provides a communications method. An eNB2 receives a first message and a request message; and determines, according to the PLMN information in the first message, whether user equipment is authorized to perform D2D communication (ProSe Services), so that the user equipment may use a D2D communication resource of a secondary cell or a non-serving cell to perform communication, thereby avoiding a problem of increased load of a primary cell of the user equipment caused when a communication resource of the user equipment is limited in the primary cell in the prior art.

### Aspect 13

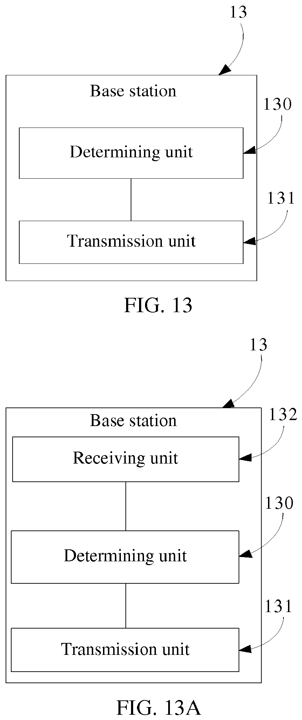

FIG. 13 is a structural diagram of a base station 13 provided in an aspect of the present disclosure. The base station 13 is configured to perform the resource allocation method in Aspect 1. The base station may be a first base station of a second cell. The second cell may be a primary cell or a serving cell of a user equipment. As shown in FIG. 13, the base station 13 may include a determining unit 130 and a transmission unit 131.

The determining unit 130 is configured to determine whether the user equipment can perform D2D communication in a first cell.

Whether the user equipment can perform D2D communication in the first cell may refer to whether the user equipment is authorized to perform D2D communication in the first cell. The first cell may be a secondary cell or a non-serving cell of the user equipment.

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

The transmission unit 131 is configured to: when the determining unit 130 determines that the user equipment can perform D2D communication in the first cell, transmit a response message to the user equipment, so that the user equipment performs D2D communication in the first cell, where the response message is used to provide a D2D communication resource in the first cell to the user equipment; or
configured to: when the determining unit 130 determines that the user equipment cannot perform D2D communication in the first cell, transmit a reply message to the user equipment, where the reply message is used to notify that the user equipment cannot perform D2D communication in the first cell.

Optionally, the response message may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

Optionally, the determining unit 130 may be specifically configured to may determine, by using any manner or multiple manners of (1), (2), or (3) in the following, whether the user equipment can perform D2D communication in the first cell.
(1) The first base station determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the first base station may determine, according to first cell information and PLMN (Public Land Mobile Network, public land mobile network) information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI of the first cell (Evolved Cell Global Identifier, e.g., the globally unique identity of a cell in E-UTRA), a PLMN identity corresponding to the first cell or a physical layer identity PCI (physical layer identity) of the first cell, or a frequency of the first cell.

The PLMN information is used to provide information on an authorization status of the PLMN, where the authorized PLMN is used for the user equipment to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.
(2) The first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, before the third manner is performed, as shown in FIG. 13A, the base station may further include a receiving unit 132.

The receiving unit 132 is configured to receive a neighbor cell measurement reported by the user equipment, where the neighbor cell measurement report includes the signal quality that is measured by the user equipment and that is in the first cell.

Optionally, the first cell and the second cell may belong to a same PLMN or different PLMNs.

Optionally, the first base station is a base station of the second cell and the first cell.

Optionally, the first base station is a base station of the second cell, and a second base station is a base station of the first cell.

Correspondingly, in addition to that the base station actively uses the foregoing method to provide a D2D communication resource to the user equipment, the base station may further perform the foregoing process at the request of the user equipment. Details are as follows:
The receiving unit 132 is further configured to receive a first request message transmitted by the user equipment, where the first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Optionally, when the base station of the first cell is the second base station, and before the first base station receives the request message transmitted by the user equipment, or if the user equipment does not transmit a request message but actively provides a D2D communication resource to a device, the first base station needs to retrieve information about some available resources from the first base station or the second base station in advance, so as to allocate a resource to user equipment that needs a D2D communication resource. Specifically:

The transmission unit 131 is further configured to transmit a second request message to the second base station, where the request message is used to request a resource for performing D2D communication or request to provide a cell resource that is of the first base station and that is used to perform D2D communication, and the resource may be used for D2D communication.

The receiving unit 132 is further configured to receive a first response message transmitted by the second base station, where the first response message provides a resource of a cell of the second base station, the resource is used for D2D communication; or the first response message includes a resource that is in the first cell and that is used for D2D communication; or
receive a first reply message transmitted by the second base station, where the first reply message is used to represent that no resource is to be provided for D2D communication.

In addition, optionally, when the base station of the first cell is the second base station, and after receiving the first request message transmitted by the user, the receiving unit forwards the request message to the second base station of the first cell. The second base station of the first cell determines a D2D communication resource. After receiving a determining result of the second base station, the receiving unit transmits a corresponding message to the user equipment. Details are as follows:

The transmission unit 131 is further configured to transmit a third request message to the second base station, where the third request message is used to request, for the user equipment, a resource for performing D2D communication.

The receiving unit 132 is further configured to receive a response message sent by the second base station, where the response message includes information about a resource for the user equipment to perform D2D communication in the first cell, and the response message represents that the user equipment can perform D2D communication in the first cell; or
receive a reply message sent by the second base station, where the reply message does not include information about a resource for the user equipment of the first cell to perform D2D communication in the first cell, and represents that the user equipment cannot perform D2D communication in the first cell.

As may be seen from above, this aspect of the present disclosure provides a base station. A D2D communication resource of a first cell is provided to a user equipment, where the first cell is a secondary cell or a non-serving cell. In this way, the user equipment may use the D2D communication resource of the secondary cell or the non-serving cell to perform communication, thereby avoiding a problem of increased load of a primary cell of the user equipment caused when a communication resource of the user equipment is limited in the primary cell or a serving cell of the user equipment in the prior art.

### Aspect 14

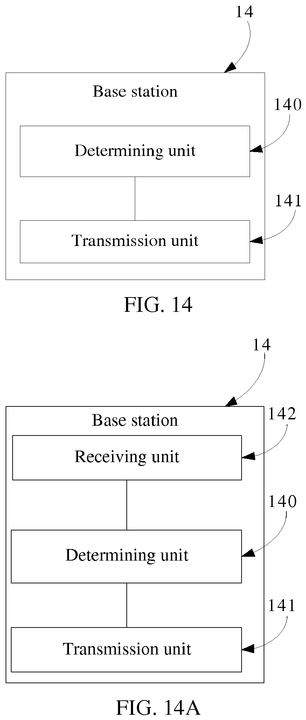

FIG. 14 is a structural diagram of a base station 14 provided in an aspect of the present disclosure. The base station 14 is configured to perform the resource allocation method in Aspect 2. The base station may be a base station of a first cell. The first cell is a secondary cell or a non-serving cell of a user equipment. As shown in FIG. 14, the base station 14 may include a determining unit 140 and a transmission unit 141.

The determining unit 140 is configured to determine whether the user equipment can perform D2D communication in the first cell.

The transmission unit 141 is configured to: when the determining unit 140 determines that the user equipment can perform D2D communication in the first cell, transmit a response message to a first base station, so that the first base station notifies that the user equipment performs D2D communication in the first cell, where the response message is used to provide a D2D communication resource of the first cell to the user equipment, provide a D2D communication resource in the first cell to the user equipment; or
when the determining unit 140 determines that the user equipment cannot perform D2D communication in the first cell, transmit a reply message to the first base station, so that the first base station notifies that the user equipment cannot perform D2D communication in the first cell.

The response message may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

The response message may further include a cell index (Scellindex). The cell index is used to indicate the first cell.

The first base station is a base station of the second cell of the user equipment. The second cell is a primary cell or a serving cell of the user equipment.

Optionally, the determining unit 140 may determine, by using any manner or multiple manners of (1), (2), or (3) in the following, whether the user equipment can perform D2D communication in the first cell.
(1) The determining unit 140 determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the determining unit 140 may determine, according to first cell information and PLMN information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI of the first cell, a PLMN identity corresponding to the first cell or a physical layer identity PCI of the first cell, or a frequency of the first cell.

The PLMN information is used to provide information on an authorization status of the PLMN, where the authorized PLMN is used for the user equipment to perform D2D communication (provides information on the authorization status of PLMN for ProSe services), or is used to indicate in which PLMNs the user equipment is authorized to perform D2D communication Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN.
(2) The first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, as shown in FIG. 4A, the base station further includes a receiving unit 142.

The receiving unit 142 is configured to receive a neighbor cell measurement reported by the user equipment, where the neighbor cell measurement report includes the signal quality that is measured by the user equipment and that is in the first cell.

Optionally, the receiving unit 142 is further configured to receive a first request message transmitted by a second base station, where the first request message is used to request to provide, to the user equipment, a resource for performing D2D communication.

The first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, optionally, the base station may further provide resource information to the first base station in advance, so that the first base station provides a D2D communication resource to the user equipment that needs a communication resource. Specifically:
The receiving unit 142 is configured to receive a second request message transmitted by the first base station, where the request message is used to request a resource for performing D2D communication or request to provide a cell resource that is of the base station and that is used for D2D communication, and the resource may be used for D2D communication;

The transmission unit 141 is further configured to send a response message to the first base station, where the response message provides a resource of a cell of the second base station, and the resource is used for D2D communication; or the response message includes a resource that is in the first cell and that is used for D2D communication; or
transmit a reply message to the first base station, where the reply message is used to represent that no resource is to be provided for D2D communication.

As may be seen from above, this aspect of the present disclosure provides a base station. The base station provides a D2D communication resource of a first cell to a user equipment, where the first cell is a secondary cell or a non-serving cell. In this way, the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 15

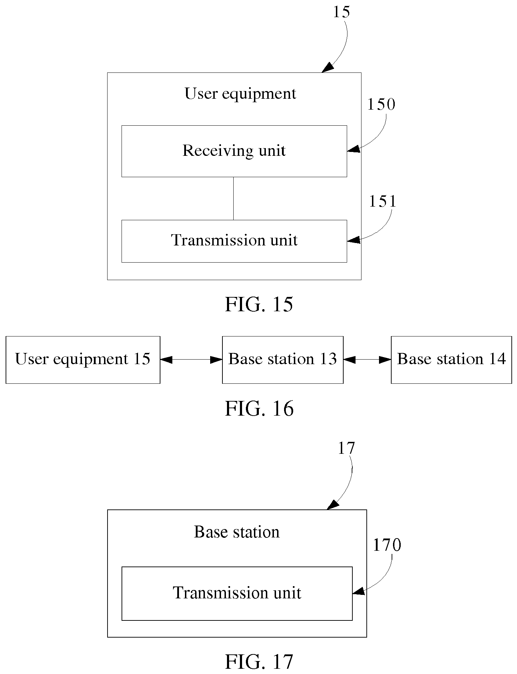

FIG. 15 is a structural diagram of user equipment 15 provided in an aspect of the present disclosure. The user equipment 15 is configured to perform the resource allocation method in Aspect 3. As shown in FIG. 15, the user equipment 15 may include a receiving unit 150 and a transmission unit 151.

The receiving unit 150 is configured to receive a response message sent by a base station, where the response message is used to provide a D2D communication resource of a first cell to the user equipment, and the first cell is a secondary cell or a non-serving cell of the user equipment.

The transmission unit 151 is configured to perform D2D communication in the first cell.

The response message may include: one or more of a cell identifier of the first cell, a physical cell identifier PCI of the first cell and a frequency of the first cell, or an identity of a PLMN to which the first cell belongs; and/or a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

The response message further includes:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.
the response message further includes a cell index Scellindex, where the cell index is used to indicate the first cell.

Optionally, the transmission unit 151 is further configured to transmit a request message to the base station.

The request message is used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication in the candidate cell, where M is a positive integer.

The candidate cell may be a cell in which the user equipment wants to perform D2D communication. Preferably, the candidate cell may be the first cell.

Optionally, to enable the base station to provide, to the user equipment, the D2D communication resource of the first cell, the transmission unit 151 is further configured to:
report a neighbor cell measurement report to the base station, so that the base station determines, according to the neighbor cell measurement report, that the user equipment can perform D2D communication in the first cell, where the neighbor cell measurement report includes the signal quality that is measured by the user equipment and that is in the first cell.

Optionally, in this aspect, the base station may be a common base station of the second cell and the first cell, where the second cell is a serving cell or a primary cell of the user equipment, and the first cell and the second cell belong to a same PLMN or different PLMNs.

The base station may also be only a base station of the second cell. The second cell is the serving cell or the primary cell of the user equipment.

As may be seen from above, this aspect of the present disclosure provides user equipment. The user equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 16

FIG. 16 is a structural diagram of a resource allocation system 16 provided in an aspect of the present disclosure. The resource allocation system 16 is configured to perform the resource allocation methods in Aspect 4, Aspect 5, and Aspect 6. As shown in FIG. 16, the resource allocation system 16 may include: a base station 13, a base station 14, and user equipment 15.

The base station 13 and the base station in Aspect 13 have a same function. The base station 14 and the base station in Aspect 14 have a same function. The user equipment 15 and the user equipment in Aspect 15 have a same function. Details are no longer elaborated one by one herein.

As may be seen from above, this aspect of the present disclosure provides a resource allocation system. A D2D communication resource of a first cell is provided to user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 17

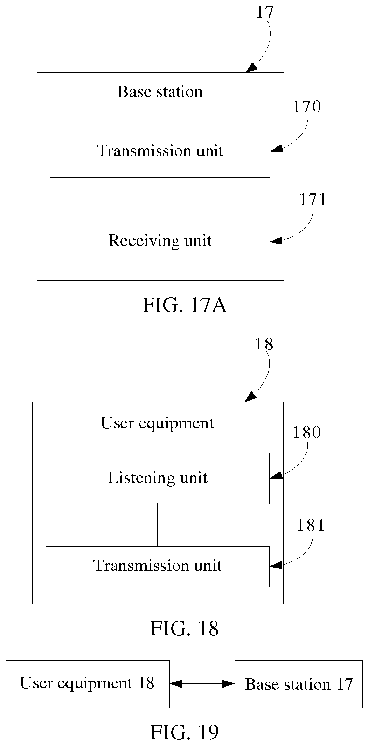

FIG. 17 is a structural diagram of a base station 17 provided in an aspect of the present disclosure. The base station 17 is configured to perform the resource allocation method in Aspect 7. As shown in FIG. 17, the base station 17 may include a transmission unit 170 and a receiving unit 171.

The transmission unit 170 is configured to transmit a system message to user equipment.

The system message includes a resource configuration of transmitting or listening to a discovery message in a first cell, so that the user equipment transmits or listens to a discovery message in the first cell according to the resource configuration.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

The first cell is a secondary cell or a non-serving cell of the user equipment. The base station may be a base station of a second cell or the first cell. The second cell may be a primary cell or a serving cell of the user equipment.

Optionally, the transmitting, by the base station, a system message to user equipment may include:
transmitting, by the base station, the system message to the user equipment in the second cell; or
transmitting, by the base station, the system to the user equipment in the first cell.

Optionally, when the base station is the base station of the second cell of the user equipment, and before the transmitting, by the base station, a system message to the user equipment, a resource configuration a resource configuration of transmitting or listening to a discovery message in the first cell may be obtained from another node (for example, another base station, or an OAM). Details are as follows: as shown in FIG. 17A, the base station may further include a receiving unit 171.

The receiving unit 171 is configured to receive a resource configuration message sent by a second base station, where the resource configuration message includes a resource configuration of receiving or transmitting a D2D discovery message in the first cell, and the second base station is a base station of the first cell.

The base station is the base station of the second cell.

As may be seen from above, this aspect of the present disclosure provides a base station. The base station transmits a system message, so that user equipment transmits or listens to a discovery message in a first cell, where the first cell is a secondary cell or a non-serving cell of the user equipment, thereby avoiding a problem of increased load of a primary cell of the user equipment caused when a communication resource of the user equipment is limited in the primary cell in the prior art.

### Aspect 18

FIG. 18 is a structural diagram of user equipment 18 provided in an aspect of the present disclosure. The user equipment 18 is configured to perform the resource allocation method in Aspect 8. As shown in FIG. 18, the user equipment 18 may include a listening unit 180 and a transmission unit 181.

The listening unit 180 is configured to listen to a system message transmitted by a base station.

The transmission unit 181 is configured to transmit or listen to a discovery message in a first cell according to the resource configuration of transmitting or listening to a discovery message.

The system message includes a resource configuration of transmitting or listening to a discovery message in the first cell. The first cell is a secondary cell or a non-serving cell of the user equipment.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

Optionally, the transmitting or listening to a discovery message in the first cell may include:
transmitting or listening to, by the user equipment, a discovery message in the authorized first cell; or
after it is determined that the user equipment is authorized to transmit or listen to a discovery message in the first cell, transmitting or listening to a discovery message in the first cell.

Optionally, the listening unit 180 is specifically configured to:
listen to the system message in the first cell or a second cell, where the second cell is a primary cell or a serving cell of the user equipment.

As may be seen from above, this aspect of the present disclosure provides user equipment. The user equipment listens to a system message, and transmits or listens to a discovery message in a first cell indicated by the system message, where the first cell is a secondary cell or a non-serving cell of the user equipment, thereby avoiding a problem of increased load of a primary cell of the user equipment caused when a communication resource of the user equipment is limited in the primary cell in the prior art.

### Aspect 19

FIG. 19 is a structural diagram of a resource allocation system 26 provided in an aspect of the present disclosure. As shown in FIG. 19, the resource allocation system 26 may include: a base station 17 and user equipment 18.

The base station 17 and the base station in Aspect 17 have a same function. The user equipment 18 and the user equipment in Aspect 18 have a same function. Details are no longer elaborated one by one herein.

As may be seen from above, this aspect of the present disclosure provides a resource allocation system. A D2D communication resource of a first cell is provided to user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 20

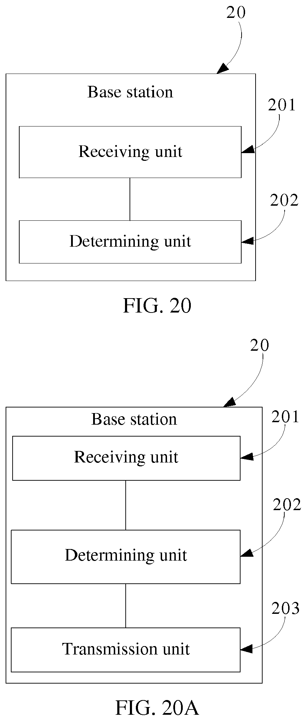

FIG. 20 is a structural diagram of a base station 20 provided in an aspect of the present disclosure. The base station 20 is applied to the resource allocation method in Aspect 9. As shown in FIG. 20, the base station 20 may include a receiving unit 201 and a determining unit 202.

The receiving unit 201 is configured to receive a first message.

The first message includes PLMN information. The first message is used to provide information on an authorization status of the PLMN, where the authorized PLMN is used for user equipment to perform D2D communication (provides information on the authorization status of PLMN for ProSe services); or is used to indicate in which PLMNs the user equipment is authorized to perform D2D communication (Indicates in which PLMN the UE is authorized for ProSe services).

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

Optionally, a first base station may receive the first message transmitted by a mobile management entity MME or a third base station of the user equipment. The third base station may be a secondary base station or a non-serving base station of the user equipment.

The determining unit 202 is configured to determine, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or a secondary cell or a serving cell or a primary cell of the user equipment.

Optionally, the receiving unit 201 is configured to receive a first cell message.

The determining unit 202 is configured to determine, according to PLMN information in the first message and the first cell information, whether the user equipment is authorized to perform D2D communication (ProSe Services).

The first cell message includes at least one of the following: an identifier ECGI of the first cell, a PLMN identity corresponding to the first cell, a physical layer identity PCI of the first cell or a frequency of the first cell.

Specifically, the determining unit 202 is configured to:
if an authorized PLMN identity provided in the PLMN information includes a PLMN identity corresponding to the first cell, determine that the UE is authorized to perform D2D communication in the first cell, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication in the first cell, or determine that the UE is not a cell in which the user equipment can be authorized to perform D2D communication.

Optionally, the receiving unit 201 may use the following manner to receive the first cell message:
receiving the request message transmitted by the user equipment, where the request message is used to request to perform D2D communication in the first cell, and the request message includes the first cell information; or
receiving a first message transmitted by a mobile management entity MME or the third base station of the user equipment, where the first message includes the first cell information.

Optionally, after the determining unit 202 determines that the user equipment can perform D2D communication in the first cell, as shown in FIG. 20A, the base station further includes a transmission unit 203.

The transmission unit 203 transmits a response message to the user equipment, so that the user equipment performs D2D communication in the first cell, where the response message is used to provide a resource for D2D communication to the user equipment.

Alternatively, when determining that the user equipment cannot perform D2D communication in the first cell, the determining unit 202 transmits a reply message to the user equipment, to notify that the user equipment cannot perform D2D communication in the first cell.

Optionally, the transmission unit 203 is further configured to transmit a second message to a second base station. The second message includes PLMN information. The second message is used to provide information on an authorization status of the PLMN to the second base station, where the authorized PLMN is used for the user terminal to perform D2D communication, or used to indicate in which PLMNs the UE is authorized to perform D2D communication.

The second base station is a base station of the first cell. The first cell is the secondary cell or the non-serving cell of the user equipment.

Moreover, to use the second base station to determine whether a communication resource is authorized, the second base station further needs the first cell information. The transmission unit 203 is further configured to transmit the first cell information to the second base station.

As may be seen from above, this aspect of the present disclosure provides a base station. The base station receives a first message; and determines, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

### Aspect 21

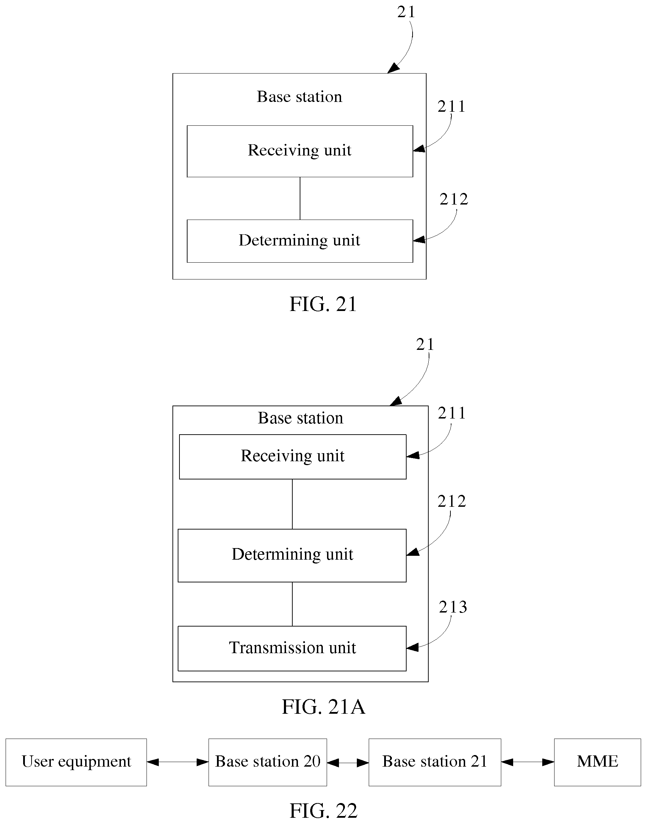

FIG. 21 is a structural diagram of a base station 21 provided in an aspect of the present disclosure. As shown in FIG. 21, the base station 21 may include a receiving unit 211 and a determining unit 212.

The receiving unit 211 is configured to receive a first message.

The first message includes PLMN information. The first message is used to provide information on an authorization status of the PLMN, where the authorized PLMN is used for user equipment to perform D2D communication; or is used to indicate in which PLMNs the user equipment is authorized to perform D2D communication.

Optionally, the receiving unit 211 may receive the first message transmitted by a mobile management entity MME or a first base station of the user equipment. The first base station may be a base station of a second cell of the user equipment. The second cell may be a primary cell or a serving cell of the user equipment.

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

The determining unit 212 is configured to determine, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or a secondary cell or the serving cell or the primary cell of the user equipment.

Optionally, the receiving unit 211 is further configured to receive first cell information.

The determining unit 212 is further configured to determine, according to the PLMN information in the first message and the first cell information, whether the user equipment is authorized to perform D2D communication (ProSe Services).

The first cell information is used to determine a PLMN identity corresponding to the first cell. The PLMN identity includes at least one of the following: an identifier ECGI of the first cell (Evolved Cell Global Identifier, e.g., the globally unique identity of a cell in E-UTRA), a PLMN identity corresponding to the first cell or a physical layer identity PCI (physical layer identity) of the first cell, or a frequency of the first cell.

The PLMN information is used to provide information on an authorization status of the PLMN, where the authorized PLMN is used for the user terminal to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, PLMN(s) supported by the user terminal, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.

Specifically, the determining unit 212 is configured to:
determine a PLMN identity corresponding to the first cell according to the first cell information; and
if an authorized PLMN identity provided in the PLMN information includes a PLMN identity corresponding to the first cell, determine that the UE is authorized to perform D2D communication in the first cell, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication in the first cell, or determine that the UE is not a cell in which the user equipment can be authorized to perform D2D communication.

Optionally, the receiving unit 211 may receive a second message transmitted by a third base station, where the second message includes the first cell information.

Alternatively, a second base station receives a first message of the first base station or the MME, where the first message includes the first cell information.

Optionally, as shown in FIG. 21A, the base station further includes a transmission unit 213.

The transmission unit 213 transmits a response message when the determining unit 212 determines that the UE is authorized to perform D2D communication in the first cell; or
transmits a reply message when the determining unit 212 determines that the UE is not authorized to perform D2D communication in the first cell.

Specifically, the transmission unit 213 is configured to:
when the first cell information is transmitted by the MME, transmit the response message to the MME; or
when the first cell information is transmitted by the first base station, transmit the response message to the first base station; or
when the first cell information is transmitted by the third base station, transmit the response message to the first base station; or
when the first cell information is transmitted by the MME, transmit the reply message to the MME; or
when the first cell information is transmitted by the first base station, transmit the reply message to the first base station; or
when the first cell information is transmitted by the third base station, transmit the reply message to the third base station.

As may be seen from above, this aspect of the present disclosure provides a base station. The base station receives a first message; and determines, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

### Aspect 22

FIG. 22 is a structural diagram of a resource allocation system 22 provided in an aspect of the present disclosure. As shown in FIG. 22, the resource allocation system 22 may include: a base station 20, a base station 21, an MME, and user equipment.

The base station 20 and the base station in Aspect 20 have a same function. The base station 21 and the base station in Aspect 20 have a same function. Details are no longer elaborated one by one herein.

As may be seen from above, this aspect of the present disclosure provides a resource allocation system. A first message is received; and it is determined, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

### Aspect 23

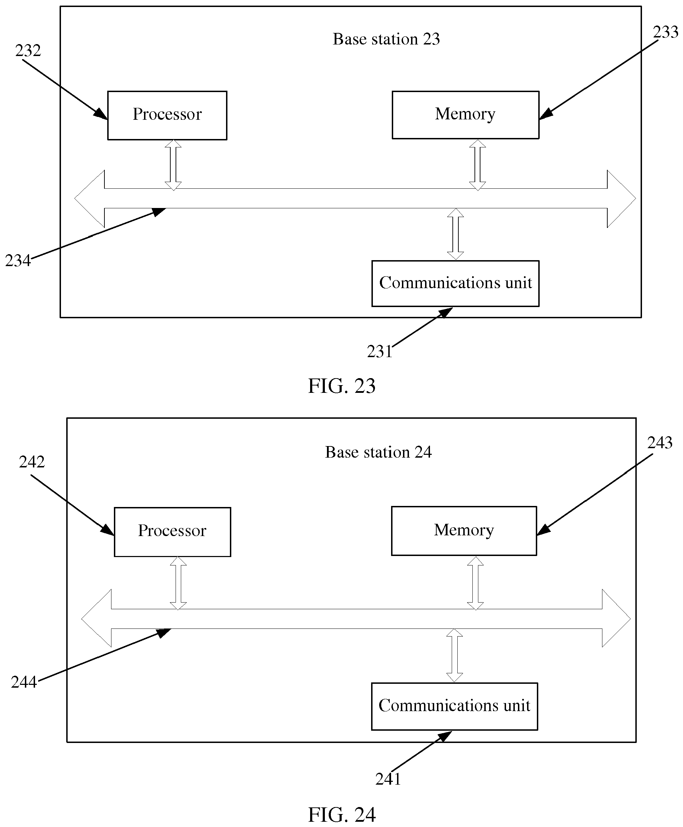

FIG. 23 is a structural diagram of a base station 23 provided in an aspect of the present disclosure. The base station 23 is configured to perform the resource allocation method in Aspect 1. The base station may be a first base station of a second cell. The second cell may be a primary cell or a serving cell of a user equipment. As shown in FIG. 23, the base station 23 may include: a communications unit 231, a processor 232, a memory 233, at least one communications bus 234 that is configured to implement connection and communication between these apparatuses.

The communications unit 231 is configured to perform data transmission with an external network element.

The processor 232 may be a central processing unit (English: central processing unit, CPU for short).

The memory 233 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 232.

The processor 232 is configured to determine whether the user equipment can perform D2D communication in a first cell.

Whether the user equipment can perform D2D communication in the first cell may refer to whether the user equipment is authorized to perform D2D communication in the first cell. The first cell may be a secondary cell or a non-serving cell of the user equipment.

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

The communications unit 231 is configured to: when the processor 232 determines that the user equipment can perform D2D communication in the first cell, transmit a response message to the user equipment, so that the user equipment performs D2D communication in the first cell, where the response message is used to provide a D2D communication resource in the first cell to the user equipment; or
configured to: when the processor 232 determines that the user equipment cannot perform D2D communication in the first cell, transmit a reply message to the user equipment, where the reply message is used to notify that the user equipment cannot perform D2D communication in the first cell.

Optionally, the response message may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of the second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, the response message may further include a cell index (Scellindex). The cell index is used to indicate the first cell.

Optionally, the processor 232 may be specifically configured to may determine, by using any manner or multiple manners of (1), (2), or (3) in the following, whether the user equipment can perform D2D communication in the first cell.
(1) The first base station determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the first base station may determine, according to first cell information and PLMN (Public Land Mobile Network, public land mobile network) information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI of the first cell (Evolved Cell Global Identifier, e.g., the globally unique identity of a cell in E-UTRA), a PLMN identity corresponding to the first cell or a physical layer identity PCI (physical layer identity) of the first cell, or a frequency of the first cell.

The PLMN information is used to provide information on an authorization status of the PLMN, where the authorized PLMN is used for the user equipment to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.
(2) The first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, before the third manner is performed, the communications unit 231 is further configured to:
receive a neighbor cell measurement reported by the user equipment, where the neighbor cell measurement report includes the signal quality that is measured by the user equipment and that is in the first cell.

Optionally, the first cell and the second cell may belong to a same PLMN or different PLMNs,
Optionally, the first base station is a base station of the second cell and the first cell;
Optionally, the first base station is a base station of the second cell, and a second base station is a base station of the first cell,
Correspondingly, in addition to that the base station actively uses the foregoing method to provide a D2D communication resource to the user equipment, the base station may further perform the foregoing process at the request of the user equipment. Details are as follows:
The communications unit 231 is further configured to receive a first request message transmitted by the user equipment, where the first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

Optionally, when the base station of the first cell is the second base station, and before the first base station receives the request message transmitted by the user equipment, or if the user equipment does not transmit a request message but actively provides a D2D communication resource to a device, the first base station needs to retrieve information about some available resources from the first base station or the second base station in advance, so as to allocate a resource to user equipment that needs a D2D communication resource. Specifically:
The communications unit 231 is further configured to transmit a second request message to the second base station, where the request message is used to request a resource for performing D2D communication or request to provide a cell resource that is of the first base station and that is used to perform D2D communication, and the resource may be used for D2D communication.

The communications unit 231 is further configured to receive a first response message transmitted by the second base station, where the first response message provides a resource of a cell of the second base station, and the resource is used for D2D communication; or the first response message includes a resource that is in the first cell and that is used for D2D communication; or
receive a first reply message transmitted by the second base station, where the first reply message is used to represent that no resource is to be provided for D2D communication.

In addition, optionally, when the base station of the first cell is the second base station, and after receiving the first request message transmitted by the user, the receiving unit forwards the request message to the second base station of the first cell. The second base station of the first cell determines a D2D communication resource. After receiving a determining result of the second base station, the receiving unit transmits a corresponding message to the user equipment. Details are as follows:

The communications unit 231 is further configured to transmit a third request message to the second base station, where the third request message is used to request, for the user equipment, a resource for performing D2D communication.

The communications unit 231 is further configured to receive a response message sent by the second base station, where the response message includes information about a resource for the user equipment to perform D2D communication in the first cell, and the response message represents that the user equipment can perform D2D communication in the first cell; or
receive a reply message sent by the second base station, where the reply message does not include information about a resource for the user equipment of the first cell to perform D2D communication in the first cell, and represents that the user equipment cannot perform D2D communication in the first cell.

As may be seen from above, this aspect of the present disclosure provides a base station. The base station provides a D2D communication resource of a first cell to the user equipment, where the first cell is a secondary cell or a non-serving cell. In this way, the user equipment may use the D2D communication resource of the secondary cell or the non-serving cell to perform communication, thereby avoiding a problem of increased load of a primary cell of the user equipment caused when a communication resource of the user equipment is limited in the primary cell or a serving cell of the user equipment in the prior art.

### Aspect 24

FIG. 24 is a structural diagram of a base station 24 provided in an aspect of the present disclosure. The base station 24 is configured to perform the resource allocation method in Aspect 2. The base station may be a base station of a first cell. The first cell is a secondary cell or a non-serving cell of a user equipment. As shown in FIG. 24, the base station 24 may include: a communications unit 241, a processor 242, a memory 243, and at least one communications bus 244 that is configured to implement connection and communication between these apparatuses.

The communications unit 241 is configured to perform data transmission with an external network element.

The processor 242 may be a central processing unit (English: central processing unit, CPU for short).

The memory 243 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 242.

The processor 242 is configured to determine whether the user equipment can perform D2D communication in the first cell.

The communications unit 241 is configured to: when the processor 242 determines that the user equipment can perform D2D communication in the first cell, transmit a response message to a first base station, so that the first base station notifies that the user equipment performs D2D communication in the first cell, where the response message is used to provide a D2D communication resource of the first cell to the user equipment, provide a D2D communication resource in the first cell to the user equipment; or
when the processor 242 determines that the user equipment cannot perform D2D communication in the first cell, transmit a reply message to the first base station, so that the first base station notifies that the user equipment cannot perform D2D communication in the first cell.

The response message may include:
one or more of a cell identifier of the first cell, a physical cell identifier PCI of the first cell and a frequency of the first cell, or an identity of a PLMN to which the first cell belongs; and/or
a quantity L of resources for the user equipment to perform D2D communication, where L is a positive integer; and/or
a configuration of the D2D communication resource of the first cell: a dedicated resource configuration, and a resource pool configuration (a resource pool configuration).

The UE autonomously selects a resource from the resource pool according to the resource pool configuration. The resource is used for the UE to perform D2D communication (for example, transmission of a discovery message is discovery message announcement).

Alternatively, the UE autonomously selects a resource from a dedicated resource on the resource pool. The resource is used for the UE to perform D2D communication (for example, transmission of a discovery message is discovery message announcement).

Alternatively, according to the resource pool configuration, the UE uses a dedicated resource on the resource pool to perform D2D communication. Specifically, the eNB provides the dedicated resource of the resource pool and configures the dedicated resource for the UE to perform D2D communication (The eNB may configure resource pool along with dedicated resource in the form of time and frequency indices for ProSe service, e.g., a discovery message announcement).

The response message may further include:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.

For the quantity L of resources, L is a positive integer may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

The response message may further include a cell index (Scellindex). The cell index is used to indicate the first cell.

The first base station is a base station of the second cell of the user equipment. The second cell is a primary cell or a serving cell of the user equipment.

Optionally, the processor 242 may determine, by using any manner or multiple manners of (1), (2), or (3) in the following, whether the user equipment can perform D2D communication in the first cell.
(1) The processor 242 determines whether the user equipment is authorized to perform D2D communication in the first cell; and
   if it is determined that the user equipment is authorized to perform D2D communication in the first cell, determines that the user equipment can perform D2D communication in the first cell; or
   if it is determined that the user equipment is not authorized to perform D2D communication, determines that the user equipment cannot perform D2D communication in the first cell.

Specifically, the processor 242 may determine, according to first cell information and PLMN information, whether the user equipment is authorized to perform D2D communication in the first cell; and
if an authorized PLMN identity provided in the PLMN information includes a PLMN identity corresponding to the first cell, determine that the UE is authorized to perform D2D communication, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication, or determine that the UE is not a cell in which the user equipment can be authorized to perform D2D communication.

The first cell information is used to determine a PLMN identity corresponding to the first cell. The PLMN identity includes at least one of the following: an identifier ECGI of the first cell, a PLMN identity corresponding to the first cell or a physical layer identity PCI of the first cell, or a frequency of the first cell.

The PLMN information is used to provide information on an authorization status of the PLMN, where the authorized PLMN is used for the user equipment to perform D2D communication (provides information on the authorization status of PLMN for ProSe services), or is used to indicate in which PLMNs the user equipment is authorized to perform D2D communication Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, a PLMN(s) supported by the user equipment, or an authorization status of each PLMN.
(2) The first base station determines whether a resource in the first cell is to be allocated to the user equipment; and
   if it is determined that a resource in the first cell is to be allocated to the user equipment, determines that the user equipment can perform D2D communication in the first cell; or
   if it is determined that no resource in the first cell is to be allocated to the user equipment, determines that the user equipment cannot perform D2D communication in the first cell.
(3) The first base station determines whether signal quality of the user equipment in the first cell meets a preset threshold, including:
   if it is determined that the signal quality that is of the user equipment and that is in the first cell meets the preset threshold, determines that the user equipment can perform D2D communication in the first cell; or
   if it is determined that the signal quality that is of the user equipment and that is in the first cell does not meet the preset threshold, determines that the user equipment cannot perform D2D communication in the first cell.

The preset threshold may be set according to a requirement. This is not limited in this aspect of the present disclosure.

Optionally, the communications unit 241 is further configured to receive a neighbor cell measurement reported by the user equipment, where the neighbor cell measurement report includes the signal quality that is measured by the user equipment and that is in the first cell.

Optionally, the communications unit 241 is further configured to receive a first request message transmitted by a second base station, where the first request message is used to request to provide, to the user equipment, a resource for performing D2D communication.

The first request message is used to request to provide, to the user equipment, a resource for performing D2D communication.

The first request message may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, where M is a positive integer.

The candidate cell may be a cell with which the user equipment wants to perform D2D communication. Preferably, the candidate cell may be the first cell. For the quantity M of resources, M is a positive integer, may be used to indicate a quantity of resources that are requested by the UE and that are used to transmit a D2D message, and may include a quantity of messages that the UE wants to transmit in each period. For example, M may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

In addition, optionally, the base station may further provide resource information to the first base station in advance, so that the first base station provides a D2D communication resource to the user equipment that needs a communication resource. Specifically:

The communications unit 241 is configured to receive a second request message transmitted by the first base station, where the request message is used to request a resource for performing D2D communication or request to provide a cell resource that is of the base station and that is used for D2D communication, and the resource may be used for D2D communication.

The communications unit 241 is further configured to transmit a response message to the first base station, where the response message provides a resource of a cell of the second base station, and the resource is used for D2D communication; or the response message includes a resource that is in the first cell and that is used for D2D communication; or
transmit a reply message to the first base station, where the reply message is used to represent that no resource is to be provided for D2D communication.

As may be seen from above, this aspect of the present disclosure provides a base station. The base station provides a D2D communication resource of a first cell to the user equipment, where the first cell is a secondary cell or a non-serving cell. In this way, the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

In all the aspects of the present disclosure, the first cell and the second cell may belong to different PLMNs or may belong to a same PLMN. This is not limited in the present disclosure. The base station of the first cell and the base station of the second cell may belong to different PLMNs or may belong to a same PLMN. The first base station and the second base station may belong to different PLMNs or may belong to a same PLMN. Details are not described.

### Aspect 25

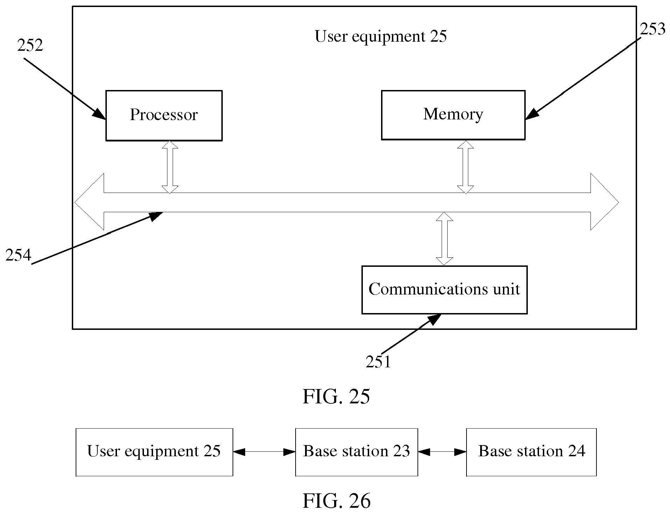

FIG. 25 is a structural diagram of user equipment 25 provided in an aspect of the present disclosure. The user equipment 25 is configured to perform the resource allocation method in Aspect 3. As shown in FIG. 25, the user equipment 25 may include: a communications unit 251, a processor 252, a memory 253, and at least one communications bus 254 that is configured to implement connection and communication between these apparatuses.

The communications unit 251 is configured to perform data transmission with an external network element.

The processor 252 may be a central processing unit (English: central processing unit, CPU for short).

The memory 253 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 252.

The communications unit 250 is configured to receive a response message sent by a base station, where the response message is used to provide a D2D communication resource of a first cell to the user equipment, and the first cell is a secondary cell or a non-serving cell of the user equipment; and
perform D2D communication in the first cell.

The response message may include: one or more of a cell identifier of the first cell, a physical cell identifier PCI of the first cell and a frequency of the first cell, or an identity of a PLMN to which the first cell belongs; and/or a quantity L of resources for the user equipment to perform D2D communication, where L is a positive integer.

For the quantity L of resources, L is a positive integer, may be used to indicate a quantity of resources that are requested by the UE and that are used to transmit a D2D message, and may include a quantity of messages that the UE wants to transmit in each period. For example, L may be discTxResourceReq (used to indicate a quantity of resources that are required by the UE and that are used to transmit a discovery message in each discovery period, and may include a quantity of discovery messages that the UE wants to transmit in each transmitting period (Indicates number of resources the UE requires every discovery period for transmitting sidelink direct discovery announcement. It concerns the number of separate discovery message(s) the UE wants to transmit every discovery period).

The response message further includes:
one or more of a cell identifier of a second cell, a physical cell identifier PCI of the second cell and a frequency of the second cell, or an identity of a PLMN to which the second cell belongs; and/or
a quantity L of resources for the user equipment to perform D2D communication, where L is a positive integer.
the response message further includes a cell index Scellindex, where the cell index is used to indicate the first cell.

Optionally, the communications unit 251 is further configured to transmit a request message to the base station.

The request message is used to request to provide, to the user equipment, a resource for performing D2D communication, and may include:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication in the candidate cell, where M is a positive integer.

The candidate cell may be a cell in which the user equipment wants to perform D2D communication. Preferably, the candidate cell may be the first cell.

Optionally, to enable the base station to provide, to the user equipment, the D2D communication resource of the first cell, the communications unit 251 is further configured to:
report a neighbor cell measurement report to the base station, so that the base station determines, according to the neighbor cell measurement report, that the user equipment can perform D2D communication in the first cell, where the neighbor cell measurement report includes the signal quality that is measured by the user equipment and that is in the first cell.

Optionally, in this aspect, the base station may be a common base station of the second cell and the first cell, where the second cell is a serving cell or a primary cell of the user equipment, and the first cell and the second cell belong to a same PLMN or different PLMNs.

The base station may also be only a base station of the second cell. The second cell is the serving cell or the primary cell of the user equipment.

As may be seen from above, this aspect of the present disclosure provides user equipment. The user equipment receives a D2D communication resource that is of a first cell and that is provided by a base station to the user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 26

FIG. 26 is a structural diagram of a resource allocation system 26 provided in an aspect of the present disclosure. As shown in FIG. 26, the resource allocation system 26 may include: a base station 23, a base station 24, and user equipment 25.

The base station 23 and the base station in Aspect 23 have a same function. The base station 24 and the base station in Aspect 24 have a same function. The user equipment 25 and the user equipment in Aspect 25 have a same function. Details are no longer elaborated one by one herein.

As may be seen from above, this aspect of the present disclosure provides a resource allocation system. A D2D communication resource of a first cell is provided to user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

### Aspect 27

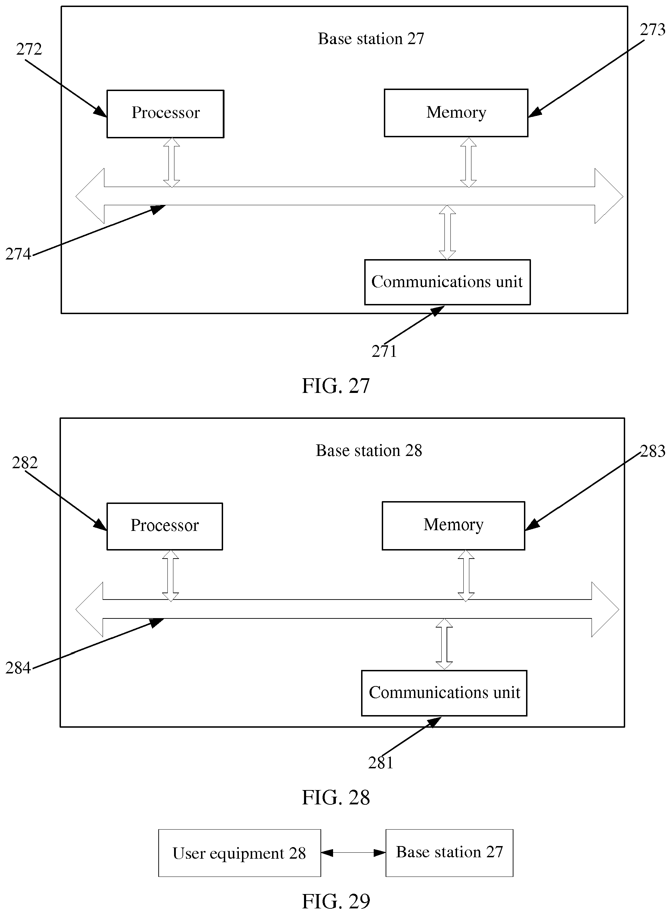

FIG. 27 is a structural diagram of a base station 27 provided in an aspect of the present disclosure. The base station 27 is configured to perform the resource allocation method in Aspect 7. As shown in FIG. 27, the base station 27 may include: a communications unit 271, a processor 272, a memory 273, and at least one communications bus 274 that is configured to implement connection and communication between these apparatuses.

The communications unit 271 is configured to perform data transmission with an external network element.

The processor 272 may be a central processing unit (English: central processing unit, CPU for short).

The memory 273 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 272.

The communications unit 271 is configured to transmit a system message to user equipment.

The system message includes a resource configuration of transmitting or listening to a discovery message in a first cell, so that the user equipment transmits or listens to a discovery message in the first cell according to the resource configuration.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

The first cell is a secondary cell or a non-serving cell of the user equipment. The base station may be a base station of a second cell or the first cell. The second cell may be a primary cell or a serving cell of the user equipment.

Optionally, the transmitting, by the base station, a system message to user equipment may include:
transmitting, by the base station, the system message to the user equipment in the second cell; or
transmitting, by the base station, the system to the user equipment in the first cell.

Optionally, when the base station is the base station of the second cell of the user equipment, and before the transmitting, by the base station, a system message to the user equipment, a resource configuration a resource configuration of transmitting or listening to a discovery message in the first cell may be obtained from another node (for example, another base station, or an OAM). Details are as follows: The communications unit 271 is further configured to:
receive a resource configuration message sent by a second base station, where the resource configuration message includes a resource configuration of receiving or transmitting a D2D discovery message in the first cell, and the second base station is a base station of the first cell.

The base station is the base station of the second cell.

As may be seen from above, this aspect of the present disclosure provides a base station. The base station transmits a system message, so that user equipment transmits or listens to a discovery message in the first cell, where the first cell is a secondary cell or a non-serving cell of the user equipment, thereby avoiding a problem of increased load of a primary cell of the user equipment caused when a communication resource of the user equipment is limited in the primary cell in the prior art.

### Aspect 28

FIG. 28 is a structural diagram of user equipment 28 provided in an aspect of the present disclosure. The user equipment 28 is configured to perform the resource allocation method in Aspect 8. As shown in FIG. 28, the user equipment 28 may include: a communications unit 281, a processor 282, a memory 283, and at least one communications bus 284 that is configured to implement connection and communication between these apparatuses.

The communications unit 281 is configured to perform data transmission with an external network element.

The processor 282 may be a central processing unit (English: central processing unit, CPU for short).

The memory 283 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 282.

The processor 282 is configured to listen to a system message transmitted by a base station.

The communications unit 281 is configured to transmit or listen to a discovery message in a first cell according to the resource configuration of transmitting or listening to a discovery message.

The system message includes a resource configuration of transmitting or listening to a discovery message in the first cell. The first cell is a secondary cell or a non-serving cell of the user equipment.

The discovery message may further be equivalent to a ProSe Direct discovery message, a D2D discovery message, a D2D Direct discovery message, or a D2D message.

The discovery message is a message transmitted between two devices, for example, a message transmitted by user equipment 1 to user equipment 2, or a message transmitted by a device 3 to the user equipment 1.

The resource configuration includes at least one of the following: a frequency of the first cell, a cell identifier ECGI of the first cell, a PCI of the first cell, or a PLMN of the first cell.

The resource configuration further includes a resource pool configuration. The resource pool configuration may include a configuration of a time-frequency resource.

Optionally, the transmitting or listening to a discovery message in the first cell may include:
transmitting or listening to, by the user equipment, a discovery message in the authorized first cell; or
after it is determined that the user equipment is authorized to transmit or listen to a discovery message in the first cell, transmitting or listening to a discovery message in the first cell.

Optionally, the processor 282 is specifically configured to:
listen to the system message in the first cell or a second cell, where the second cell is a primary cell or a serving cell of the user equipment.

As may be seen from above, this aspect of the present disclosure provides user equipment. The user equipment listens to a system message, and transmits or listens to a discovery message in a first cell indicated by the system message, where the first cell is a secondary cell or a non-serving cell of the user equipment; thereby avoiding a problem of increased load of a primary cell of the user equipment caused when a communication resource of the user equipment is limited in the primary cell in the prior art.

### Aspect 29

FIG. 29 is a structural diagram of a resource allocation system 26 provided in an aspect of the present disclosure. As shown in FIG. 29, the resource allocation system 26 may include: a base station 27 and user equipment 28.

The base station 27 and the base station in Aspect 27 have a same function. The user equipment 28 and the user equipment in Aspect 28 have a same function. Details are no longer elaborated one by one herein.

### Aspect 30

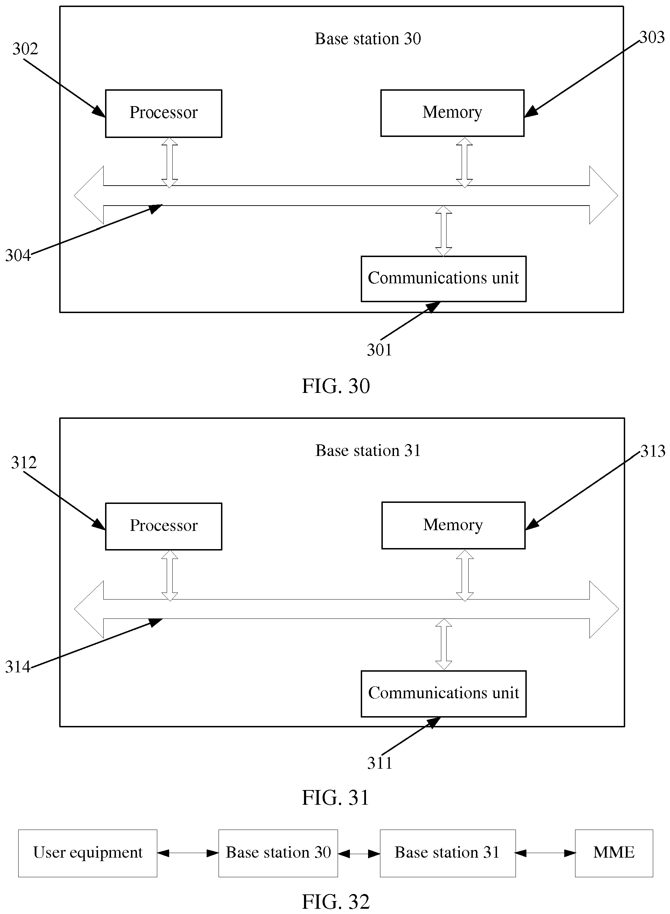

FIG. 30 is a structural diagram of a base station 30 provided in an aspect of the present disclosure. The base station 30 is applied to the resource allocation method in Aspect 9. As shown in FIG. 30, the base station may include: a communications unit 301, a processor 302, a memory 303, and at least one communications bus 304 that is configured to implement connection and communication between these apparatuses;
The communications unit 301 is configured to perform data transmission with an external network element.

The processor 302 may be a central processing unit (English: central processing unit, CPU for short).

The memory 303 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 302.

The communications unit 301 is configured to receive a first message.

The first message includes PLMN information. The first message is used to provide information on an authorization status of the PLMN, where the authorized PLMN is used for user equipment to perform D2D communication (provides information on the authorization status of PLMN for ProSe services); or is used to indicate in which PLMNs the user equipment is authorized to perform D2D communication (Indicates in which PLMN the UE is authorized for ProSe services).

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

Optionally, a first base station may receive the first message transmitted by a mobile management entity MME or a third base station of the user equipment. The third base station may be a secondary base station or a non-serving base station of the user equipment.

The processor 302 is configured to determine, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or a secondary cell or a serving cell or a primary cell of the user equipment.

Optionally, the communications unit 301 is configured to receive a first cell message.

The processor 302 is configured to determine, according to PLMN information in the first message and the first cell information, whether the user equipment is authorized to perform D2D communication (ProSe Services).

The first cell message includes at least one of the following: an identifier ECGI of the first cell, a PLMN identity corresponding to the first cell, a physical layer identity PCI of the first cell or a frequency of the first cell.

Specifically, the processor 302 is configured to:
if an authorized PLMN identity provided in the PLMN information includes a PLMN identity corresponding to the first cell, determine that the UE is authorized to perform D2D communication in the first cell, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication in the first cell, or determine that the UE is not a cell in which the user equipment can be authorized to perform D2D communication.

Optionally, the communications unit 301 may use the following manner to receive the first cell message:
receiving the request message transmitted by the user equipment, where the request message is used to request to perform D2D communication in the first cell, and the request message includes the first cell information; or
receiving a first message transmitted by a mobile management entity MME or the third base station of the user equipment, where the first message includes the first cell information.

Optionally, after the processor 302 determines that the user equipment can perform D2D communication in the first cell, the communications unit 301 is further configured to:
transmit a response message to the user equipment, so that the user equipment performs D2D communication in the first cell, where the response message is used to provide a resource for D2D communication to the user equipment; or
when the processor 302 determines that the user equipment cannot perform D2D communication in the first cell, transmit a reply message to the user equipment, to notify that the user equipment cannot perform D2D communication in the first cell.

Optionally, the communications unit 301 is further configured to transmit a second message to a second base station. The second message includes PLMN information. The second message is used to provide information on an authorization status of the PLMN to the second base station, where the authorized PLMN is used for the user terminal to perform D2D communication, or used to indicate in which PLMNs the UE is authorized to perform D2D communication.

The second base station is a base station of the first cell. The first cell is the secondary cell or the non-serving cell of the user equipment.

Moreover, to use the second base station to determine whether a communication resource is authorized, the second base station further needs the first cell information. The communications unit 301 is further configured to transmit the first cell information to the second base station.

As may be seen from above, this aspect of the present disclosure provides a base station. The base station receives a first message, and determines, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

### Aspect 31

FIG. 31 is a structural diagram of a base station 31 provided in an aspect of the present disclosure. As shown in FIG. 31, the base station 31 may include: a communications unit 311, a processor 312, a memory 313, and at least one communications bus 314 that is configured to implement connection and communication between these apparatuses.

The communications unit 311 is configured to perform data transmission with an external network element.

The processor 312 may be a central processing unit (English: central processing unit, CPU for short).

The memory 313 may be a volatile memory (English: volatile memory), such as a random-access memory (English: random-access memory, RAM for short); or a non-volatile memory (English: non-volatile memory), such as a read-only memory (English: read-only memory, ROM for short), a flash memory (English: flash memory), a hard disk drive (English: hard disk drive, HDD for short) or a solid-state drive (English: solid-state drive, SSD for short); or a combination of the foregoing types of memories; and provides instructions and data for the processor 312.

The communications unit 311 is configured to receive a first message.

The first message includes PLMN information. The first message is used to provide information on an authorization status of the PLMN, where the authorized PLMN is used for user equipment to perform D2D communication; or is used to indicate in which PLMNs the user equipment is authorized to perform D2D communication.

Optionally, the communications unit 311 may receive the first message transmitted by a mobile management entity MME or a first base station of the user equipment. The first base station may be a base station of a second cell of the user equipment. The second cell may be a primary cell or a serving cell of the user equipment.

The PLMN information may include a PLMN identity. The PLMN identity is used to identify whether a PLMN corresponding to the PLMN identity is authorized to be used to perform D2D communication.

The PLMN information further includes:
a PLMN identity of at least one authorized PLMN, and/or
a PLMN identity of at least one non-authorized PLMN, and/or
PLMN(s) supported by the UE, and an authorization status of each PLMN.

The determining unit 312 is configured to determine, according to the PLMN information in the first message, whether the user equipment is authorized to perform D2D communication (ProSe Services).

The D2D communication may be specifically equivalent to a ProSe service, and may include one or more of the following communication: D2D discovery (ProSe Direct Discovery), D2D relay communication (ProSe relay Communication), D2D communication (ProSe Direct Communication), transmission of a D2D discovery (ProSe Direct Discovery) message, transmission of a D2D relay communication (ProSe relay Communication) message, transmission of a D2D communication (ProSe Direct Communication) message, reception of a D2D discovery message, reception of a D2D delay relay communication message, or listening to a D2D discovery message.

Specifically, the determining whether the UE is authorized to perform D2D communication (ProSe Services) may include:
determining whether the UE is authorized to perform D2D communication in which PLMNs; or
determining whether the UE is authorized to perform D2D communication in cells of which PLMNs; or
determining whether the UE is authorized to perform D2D communication in an authorized PLMN provided in the PLMN information; or
determining whether the UE is authorized to perform D2D communication in a cell in an authorized PLMN provided in the PLMN information; or
determining whether the UE is authorized to perform D2D communication in a first cell, where the first cell is a non-serving cell or a secondary cell or the serving cell or the primary cell of the user equipment.

Optionally, the communications unit 311 is further configured to receive first cell information.

The determining unit 312 is further configured to determine, according to the PLMN information in the first message and the first cell information, whether the user equipment is authorized to perform D2D communication (ProSe Services).

The first cell information is used to determine a PLMN identity corresponding to the first cell. The PLMN identity includes at least one of the following: an identifier ECGI of the first cell (Evolved Cell Global Identifier, e.g., the globally unique identity of a cell in E-UTRA), a PLMN identity corresponding to the first cell or a physical layer identity PCI (physical layer identity) of the first cell, or a frequency of the first cell.

The PLMN information is used to provide information on an authorization status of the PLMN, where the authorized PLMN is used for the user terminal to perform D2D communication (the PLMN information is used to provide information on the authorization status of PLMN for ProSe services), or is used to indicate in which PLMNs the user equipment is authorized to perform D2D communication (Indicates in which PLMN the UE is authorized for ProSe services), or is used to indicate in cells corresponding to which PLMNs the user equipment is authorized to perform D2D communication. The PLMN information may include one or more of the following:
a PLMN identity of at least one authorized PLMN, a PLMN identity of at least one non-authorized PLMN, PLMN(s) supported by the user terminal, or an authorization status of each PLMN. The authorization status of each PLMN includes true (ture) or false (false). The "true (ture)" represents that the PLMN is a PLMN in which the UE is authorized, or the PLMN is a PLMN in which the UE is authorized to perform D2D communication. The "false (false)" represents that the PLMN is a PLMN in which the UE is not authorized, or the PLMN is a PLMN in which the UE is not authorized to perform D2D communication.

Specifically, the determining unit 312 is configured to:
determine a PLMN identity corresponding to the first cell according to the first cell information; and
if an authorized PLMN identity provided in the PLMN information includes a PLMN identity corresponding to the first cell, determine that the UE is authorized to perform D2D communication in the first cell, or determine that the first cell is a cell in which the user equipment can be authorized to perform D2D communication; or
if an authorized PLMN identity provided in the PLMN information does not include a PLMN identity corresponding to the first cell, determine that the UE is not authorized to perform D2D communication in the first cell, or determine that the UE is not a cell in which the user equipment can be authorized to perform D2D communication.

Optionally, the communications unit 311 may receive a second message transmitted by a third base station, where the second message includes the first cell information.

Alternatively,a second base station receives a first message of the first base station or the MME, where the first message includes the first cell information.

Optionally, the communications unit 311 is further configured to:
when the determining unit 312 determines that the UE is authorized to perform D2D communication in the first cell, transmit a response message; or
when the determining unit 312 determines that the UE is not authorized to perform D2D communication in the first cell, transmit a reply message.

Specifically, the communications unit 311 is configured to:
when the first cell information is transmitted by the MME, transmit the response message to the MME; or
when the first cell information is transmitted by the first base station, transmit the response message to the first base station; or
when the first cell information is transmitted by the third base station, transmit the response message to the first base station;
when the first cell information is transmitted by the MME, transmit the reply message to the MME; or
when the first cell information is transmitted by the first base station, transmit the reply message to the first base station; or
when the first cell information is transmitted by the third base station, transmit the reply message to the third base station.

As may be seen from above, this aspect of the present disclosure provides a base station. The base station receives a first message; and determines, according to the PLMN information in the first message, whether user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

### Aspect 32

FIG. 32 is a structural diagram of a resource allocation system 32 provided in an aspect of the present disclosure. As shown in FIG. 32, the resource allocation system 32 may include: a base station 30, a base station 31, an MME, and user equipment.

The base station 30 and the base station in Aspect 30 have a same function. The base station 31 and the base station in Aspect 31 have a same function. Details are no longer elaborated one by one herein.

As may be seen from above, this aspect of the present disclosure provides a resource allocation system. A first message is received; and it is determined, according to PLMN information in the first message, whether the user equipment is authorized to perform D2D communication (ProSe Services). In this way, the user equipment may use a D2D communication resource of a secondary cell or a non-serving cell to perform communication, thereby avoiding a problem of increased load of a primary cell of the user equipment caused when a communication resource of the user equipment is limited in the primary cell or a serving cell of the user equipment in the prior art.

As may be seen from above, this aspect of the present disclosure provides a resource allocation system. A D2D communication resource of a first cell is provided to user equipment, where the first cell is a secondary cell or a non-serving cell, so that the user equipment may use the D2D communication resource of the secondary cell or the non-serving cell to perform communication, thereby avoiding a problem of increased load of a primary cell of the user equipment caused when a communication resource of the user equipment is limited in the primary cell in the prior art.

It may be clearly understood by a person skilled in the art that, for the purpose of convenient and brief description, for a detailed working process of the foregoing unit and system, reference may be made to a corresponding process in the foregoing method aspects, and details are not described herein again.

In the several aspects provided in the present application, it should be understood that the disclosed system, device, and method may be implemented in other manners. For example, the described device aspect is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the aspects.

In addition, functional units in the aspects of the present disclosure may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the aspects of the present disclosure. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A person of ordinary skill in the art may understand that all or a part of the steps of the methods in the aspects may be implemented by a program instructing relevant hardware. The program may be stored in a computer readable storage medium. The storage medium may include: a read-only memory, a random-access memory, a magnetic disk, or an optical disc.

## Claims

1. A resource allocation method, comprising:
receiving (301), by user equipment, a response message sent by a base station, wherein the response message is used to provide a D2D communication resource of a first cell to the user equipment, and the first cell is a secondary cell or a non-serving cell of the user equipment; and
performing (302), by the user equipment, D2D communication in the first cell;
wherein, before the receiving, by user equipment, a response message sent by a base station, the method further comprises:
transmitting, by the user equipment, a request message to the base station, wherein the request message is used to request a resource used by the user equipment to perform D2D communication;
wherein the method further comprises:
reporting, by the user equipment, a neighbor cell measurement report to the base station, so that the base station determines, according to the neighbor cell measurement report, that the user equipment can perform D2D communication in the first cell, wherein the neighbor cell measurement report comprises the signal quality that is measured by the user equipment and that is in the first cell.

2. The resource allocation method according to claim 1, wherein
the base station is a base station of a second cell and the first cell, and the second cell is a serving cell or a primary cell of the user equipment; or
the base station is a base station of a second cell, and the second cell is a serving cell or a primary cell of the user equipment.

3. The resource allocation method according to claim 2, wherein the request message comprises:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, wherein M is a positive integer.

4. The resource allocation method according to claim 3, wherein
the candidate cell is the first cell.

5. The resource allocation method according to any one of claims 1 to 4, wherein the D2D communication "ProSe service" comprises: one or more of D2D discovery "ProSe Direct Discovery", D2D relay communication "ProSe relay Communication", communication "ProSe Direct Communication", transmission of a D2D discovery "ProSe Direct Discovery" message, transmission of a D2D relay communication "ProSe relay Communication" message, transmission of a D2D communication "ProSe Direct Communication" message, reception of a D2D discovery message, reception of a D2D delay relay communication message, listening to a D2D discovery message, or listening to a D2D relay communication message.

6. The resource allocation method according to claim 5, wherein
the first cell and the second cell belong to different PLMNs or belong to a same PLMN.

7. The resource allocation method according to claim 1, wherein
the first cell is the secondary cell or the non-serving cell of the user equipment, and the user equipment is authorized to perform D2D communication in the first cell; or
the first cell is the secondary cell or the non-serving cell of the user equipment, and the user equipment is authorized to use a resource of the first cell to perform D2D communication.

8. User equipment, comprising: a receiving unit (150), configured to receive a response message sent by a base station, wherein the response message is used to provide a D2D communication resource of a first cell to the user equipment, and the first cell is a secondary cell or a non-serving cell of the user equipment; and
a transmission unit (151), configured to perform D2D communication in the first cell;
wherein the transmission unit is further configured to: before the user equipment receives the response message sent by the base station, transmit a request message to the base station, wherein the request message is used to request a resource used by the user equipment to perform D2D communication; and
wherein the transmission unit is further configured to report a neighbor cell measurement report to the base station, so that the base station determines, according to the neighbor cell measurement report, that the user equipment can perform D2D communication in the first cell, wherein the neighbor cell measurement report comprises the signal quality that is measured by the user equipment and that is in the first cell.

9. The user equipment according to claim 8, wherein
the base station is a base station of a second cell and the first cell, and the second cell is a serving cell or a primary cell of the user equipment; or
the base station is a base station of a second cell, and the second cell is a serving cell or a primary cell of the user equipment.

10. The user equipment according to claim 9, wherein the request message comprises:
one or more of a cell identifier ECGI of a candidate cell, a physical cell identifier PCI of the candidate cell and a frequency of the cell, or an identity of a PLMN to which the candidate cell belongs; and/or
a quantity M of resources for the user equipment to perform D2D communication, wherein M is a positive integer.

11. The user equipment according to claim 10, wherein
the candidate cell is the first cell.

12. The user equipment according to any one of claims 8 to 11, wherein the D2D communication "ProSe Service" comprises: one or more of D2D discovery "ProSe Direct Discovery", D2D relay communication "ProSe relay Communication" D2D communication "ProSe Direct Communication", transmission of a D2D discovery "ProSe Direct Discovery" message, transmission of a D2D relay communication "ProSe relay Communication" message, transmission of a D2D communication "ProSe Direct Communication" message, reception of a D2D discovery message, reception of a D2D delay relay communication message, listening to a D2D discovery message, or listening to a D2D relay communication message.

13. The user equipment according to claim 12, wherein
the first cell and the second cell belong to different PLMNs or belong to a same PLMN.

14. The user equipment according to claim 8, wherein
the first cell is the secondary cell or the non-serving cell of the user equipment, and the user equipment is authorized to perform D2D communication in the first cell; or the first cell is the secondary cell or the non-serving cell of the user equipment, and the user equipment is authorized to use a resource of the first cell to perform D2D communication.

## Patentansprüche

1. Ressourcenzuweisungsverfahren, Folgendes umfassend:
Empfangen (301) einer Antwortnachricht, die durch eine Basisstation gesendet wurde, durch ein Teilnehmergerät, wobei die Antwortnachricht dazu verwendet wird, dem Teilnehmergerät eine D2D-Kommunikationsressource einer ersten Zelle bereitzustellen, und wobei die erste Zelle eine Sekundärzelle oder eine nicht zuständige Zelle des Teilnehmergeräts ist; und
Durchführen (302) von D2D-Kommunikation in der ersten Zelle durch das Teilnehmergerät;
wobei das Verfahren vor dem Empfangen einer Antwortnachricht, die von einer Basisstation gesendet wurde, durch ein Teilnehmergerät ferner Folgendes umfasst:
Übermitteln einer Anfragenachricht an die Basisstation durch das Teilnehmergerät, wobei die Anfragenachricht dazu verwendet wird, eine Ressource anzufragen, die durch das Teilnehmergerät verwendet wird, um D2D-Kommunikation durchzuführen;
wobei das Verfahren ferner Folgendes umfasst:
Berichten eines Nachbarzellmessberichts an die Basisstation durch das Teilnehmergerät, sodass die Basisstation gemäß dem Nachbarzellmessbericht bestimmt, dass das Teilnehmergerät D2D-Kommunikation in der ersten Zelle durchführen kann, wobei der Nachbarzellmessbericht die Signalqualität umfasst, die durch das Teilnehmergerät gemessen wird und die sich in der ersten Zelle befindet.

2. Ressourcenzuweisungsverfahren nach Anspruch 1, wobei
die Basisstation eine Basisstation einer zweiten Zelle und der ersten Zelle ist und die zweite Zelle eine zuständige Zelle oder eine Primärzelle des Teilnehmergeräts ist; oder
die Basisstation eine Basisstation einer zweiten Zelle ist und die zweite Zelle eine zuständige Zelle oder eine Primärzelle des Teilnehmergeräts ist.

3. Ressourcenzuweisungsverfahren nach Anspruch 2, wobei die Anfragenachricht Folgendes umfasst:
eine oder mehrere einer Zellkennung ECGI einer Kandidatenzelle, einer physikalischen Zellkennung PCI der Kandidatenzelle und einer Frequenz der Zelle oder einer Identität einer PLMN, zu der die Kandidatenzelle gehört; und/oder
eine Menge M von Ressourcen für das Teilnehmergerät, um D2D-Kommunikation durchzuführen, wobei M ein positives Integer ist.

4. Ressourcenzuweisungsverfahren nach Anspruch 3, wobei die Kandidatenzelle die erste Zelle ist.

5. Ressourcenzuweisungsverfahren nach einem der Ansprüche 1 bis 4, wobei die D2D-Kommunikation "ProSe service" Folgendes umfasst:
eines oder mehrere von D2D Discovery ("ProSe Direct Discovery"), D2D-Relaiskommunikation ("ProSe relay Communication"), D2D-Kommunikation ("ProSe Direct Communication"), Übermitteln einer D2D-Discovery-Nachricht ("ProSe Direct Discovery"), Übermitteln einer D2D-Relaiskommunikationsnachricht ("ProSe relay Communication"), Übermitteln einer D2D-Kommunikationsnachricht ("ProSe Direct Communication"), Empfang einer D2D-Discovery-Nachricht, Empfang einer D2D-Verzögerungsrelaiskommunikationsnachricht, Hören einer D2D-Discovery-Nachricht oder Hören einer D2D-Relaiskommunikationsnachricht.

6. Ressourcenzuweisungsverfahren nach Anspruch 5, wobei die erste Zelle und die zweite Zelle zu verschiedenen PLMNs gehören oder zu einer gleichen PLMN gehören.

7. Ressourcenzuweisungsverfahren nach Anspruch 1, wobei die erste Zelle die Sekundärzelle oder die nicht zuständige Zelle des Teilnehmergeräts ist, und wobei das Teilnehmergerät dazu autorisiert ist, D2D-Kommunikation in der ersten Zelle durchzuführen; oder
die erste Zelle die Sekundärzelle oder die nicht zuständige Zelle des Teilnehmergeräts ist, und wobei das Teilnehmergerät dazu autorisiert ist, eine Ressource der ersten Zelle zu nutzen, um D2D-Kommunikation durchzuführen.

8. Teilnehmergerät, Folgendes umfassend:
eine Empfangseinheit (150), die dazu konfiguriert ist, eine Antwortnachricht zu empfangen, die von einer Basisstation gesendet wurde, wobei die Antwortnachricht dazu verwendet wird, eine D2D-Kommunikationsressource einer ersten Zelle an das Teilnehmergerät bereitzustellen, und wobei die erste Zelle eine Sekundärzelle oder eine nicht zuständige Zelle des Teilnehmergeräts ist; und
eine Übermittlungseinheit (151), die dazu konfiguriert ist, eine D2D-Kommunikation in der ersten Zelle durchzuführen;
wobei die Übermittlungseinheit ferner zu Folgendem konfiguriert ist: Übermitteln einer Anfragenachricht an die Basisstation, bevor das Teilnehmergerät die Antwortnachricht empfängt, die von der Basisstation gesendet wurde, wobei die Anfragenachricht dazu verwendet wird, eine Ressource anzufragen, die durch das Teilnehmergerät verwendet wird, um D2D-Kommunikation durchzuführen; und
wobei die Übermittlungseinheit ferner dazu konfiguriert ist, der Basisstation einen Nachbarzellmessbericht zu berichten, sodass die Basisstation gemäß dem Nachbarzellmessbericht bestimmt, dass das Teilnehmergerät eine D2D-Kommunikation in der ersten Zelle durchführen kann, wobei der Nachbarzellmessbericht die Signalqualität umfasst, die von dem Teilnehmergerät gemessen wird und die sich in der ersten Zelle befindet.

9. Teilnehmergerät nach Anspruch 8, wobei
die Basisstation eine Basisstation einer zweiten Zelle und der ersten Zelle ist und wobei die zweite Zelle eine zuständige Zelle oder eine Primärzelle des Teilnehmergeräts ist; oder
die Basisstation eine Basisstation einer zweiten Zelle ist und wobei die zweite Zelle eine zuständige Zelle oder eine Primärzelle des Teilnehmergeräts ist.

10. Teilnehmergerät nach Anspruch 9, wobei die Anfragenachricht Folgendes umfasst:
eine oder mehrere einer Zellkennung ECGI einer Kandidatenzelle, einer physikalischen Zellkennung PCI der Kandidatenzelle und einer Frequenz der Zelle oder einer Identität einer PLMN, zu der die Kandidatenzelle gehört; und/oder
eine Menge M von Ressourcen für das Teilnehmergerät, um D2D-Kommunikation durchzuführen, wobei M ein positives Integer ist.

11. Teilnehmergerät nach Anspruch 10, wobei die Kandidatenzelle die erste Zelle ist.

12. Teilnehmergerät nach einem der Ansprüche 8 bis 11, wobei die D2D-Kommunikation "ProSe service" Folgendes umfasst:
Eines oder mehrere von D2D Discovery ("ProSe Direct Discovery"), D2D-Relaiskommunikation ("ProSe relay Communication"), D2D-Kommunikation ("ProSe Direct Communication"), Übermitteln einer D2D Discovery ("ProSe Direct Discovery"), Übermitteln einer D2D-Relaiskommunikationsnachricht ("ProSe relay Communication"), Übermitteln einer D2D-Kommunikationsnachricht ("ProSe Direct Communication"), Empfang einer D2D-Discovery-Nachricht, Empfang einer D2D-Verzögerungsrelaiskommunikationsnachricht, Hören einer D2D-Discovery-Nachricht oder Hören einer D2D-Relaiskommunikationsnachricht.

13. Teilnehmergerät nach Anspruch 12, wobei die erste Zelle und
die zweite Zelle zu verschiedenen PLMNs gehören oder zu einer gleichen PLMN gehören.

14. Teilnehmergerät nach Anspruch 8, wobei
die erste Zelle die Sekundärzelle oder die nicht zuständige Zelle des Teilnehmergeräts ist, und wobei das Teilnehmergerät dazu autorisiert ist, D2D-Kommunikation in der ersten Zelle durchzuführen; oder wobei die erste Zelle die Sekundärzelle oder die nicht zuständige Zelle des Teilnehmergeräts ist, und wobei das Teilnehmergerät dazu autorisiert ist, eine Ressource der ersten Zelle zu nutzen, um D2D-Kommunikation durchzuführen.

## Revendications

1. Procédé d'attribution de ressource, comprenant :
la réception (301), par un équipement utilisateur, d'un message de réponse envoyé par une station de base, dans lequel le message de réponse est utilisé pour fournir une ressource de communication D2D d'une première cellule à l'équipement utilisateur, et la première cellule est une cellule secondaire ou une cellule de non-service de l'équipement utilisateur ; et
la réalisation (302), par l'équipement utilisateur, d'une communication D2D dans la première cellule ;
dans lequel, avant la réception, par l'équipement utilisateur, d'un message de réponse envoyé par une station de base, le procédé comprend en outre :
la transmission, par l'équipement utilisateur, d'un message de demande à la station de base, dans lequel le message de demande est utilisé pour demander une ressource utilisée par l'équipement utilisateur pour réaliser une communication D2D ;
dans lequel le procédé comprend en outre :
la création, par l'équipement utilisateur, d'un rapport de mesure de cellule voisine pour la station de base, de telle sorte que la station de base détermine, selon le rapport de mesure de cellule voisine, que l'équipement utilisateur peut réaliser une communication D2D dans la première cellule, dans lequel le rapport de mesure de cellule voisine comprend la qualité de signal qui est mesurée par l'équipement utilisateur et qui est dans la première cellule.

2. Procédé d'attribution de ressource selon la revendication 1, dans lequel la station de base est une station de base d'une seconde cellule et de la première cellule, et la seconde cellule est une cellule de service ou une cellule primaire de l'équipement utilisateur ; ou
la station de base est une station de base d'une seconde cellule, et la seconde cellule est une cellule de service ou une cellule primaire de l'équipement utilisateur.

3. Procédé d'attribution de ressource selon la revendication 2, dans lequel le message de demande comprend :
un ou plusieurs d'un identifiant de cellule ECGI d'une cellule candidate, d'un identifiant de cellule physique PCI de la cellule candidate et d'une fréquence de la cellule, ou d'une identité d'un PLMN auquel appartient la cellule candidate ; et/ou
une quantité M de ressources pour que l'équipement utilisateur réalise une communication D2D, dans lequel M est un nombre entier positif.

4. Procédé d'attribution de ressource selon la revendication 3, dans lequel la cellule candidate est la première cellule.

5. Procédé d'attribution de ressource selon l'une quelconque des revendications 1 à 4, dans lequel la communication D2D « service ProSe » comprend :
une ou plusieurs d'une découverte D2D « Découverte Directe ProSe », d'une communication relais D2D « Communication Relais ProSe », d'une communication D2D « Communication Directe ProSe », d'une transmission d'un message de découverte D2D « Découverte Directe ProSe », d'une transmission d'un message de communication relais D2D « Communication relais ProSe », d'une transmission d'un message de communication D2D « Communication Directe ProSe », d'une réception d'un message de découverte D2D, d'une réception d'un message de communication relais de retard D2D, d'une écoute d'un message de découverte D2D, ou d'une écoute d'un message de communication relais D2D.

6. Procédé d'attribution de ressource selon la revendication 5, dans lequel la première cellule et la seconde cellule appartiennent à des PLMN différents ou appartiennent à un même PLMN.

7. Procédé d'attribution de ressource selon la revendication 1, dans lequel la première cellule est la cellule secondaire ou la cellule de non-service de l'équipement utilisateur, et l'équipement utilisateur est autorisé à réaliser une communication D2D dans la première cellule ; ou
la première cellule est la cellule secondaire ou la cellule de non-service de l'équipement utilisateur, et l'équipement utilisateur est autorisé à utiliser une ressource de la première cellule pour réaliser une communication D2D.

8. Equipement utilisateur, comprenant :
une unité de réception (150), conçue pour recevoir un message de réponse envoyé par une station de base, dans lequel le message de réponse est utilisé pour fournir une ressource de communication D2D d'une première cellule à l'équipement utilisateur, et la première cellule est une cellule secondaire ou une cellule de non-service de l'équipement utilisateur ; et
une unité de transmission (151), conçue pour réaliser une communication D2D dans la première cellule ;
dans lequel l'unité de transmission est en outre conçue pour :
avant que l'équipement utilisateur reçoive le message de réponse envoyé par la station de base, transmettre un message de demande à la station de base, dans lequel le message de demande est utilisé pour demander une ressource utilisée par l'équipement utilisateur pour réaliser une communication D2D ; et
dans lequel l'unité de transmission est en outre conçue pour créer un rapport de mesure de cellule voisine pour la station de base, de telle sorte que la station de base détermine, selon le rapport de mesure de cellule voisine, que l'équipement utilisateur peut réaliser une communication D2D dans la première cellule, dans lequel le rapport de mesure de cellule voisine comprend la qualité de signal qui est mesurée par l'équipement utilisateur et qui est dans la première cellule.

9. Equipement utilisateur selon la revendication 8, dans lequel
la station de base est une station de base d'une seconde cellule et de la première cellule, et la seconde cellule est une cellule de service ou une cellule primaire de l'équipement utilisateur ; ou
la station de base est une station de base d'une seconde cellule, et la seconde cellule est une cellule de service ou une cellule primaire de l'équipement utilisateur.

10. Equipement utilisateur selon la revendication 9, dans lequel le message de demande comprend :
un ou plusieurs d'un identifiant de cellule ECGI d'une cellule candidate, d'un identifiant de cellule physique PCI de la cellule candidate et d'une fréquence de la cellule, ou d'une identité d'un PLMN auquel appartient la cellule candidate ; et/ou
une quantité M de ressources pour que l'équipement utilisateur réalise une communication D2D, dans lequel M est un nombre entier positif.

11. Equipement utilisateur selon la revendication 10, dans lequel la cellule candidate est la première cellule.

12. Equipement utilisateur selon l'une quelconque des revendications 8 à 11, dans lequel la communication D2D « service ProSe » comprend :
une ou plusieurs d'une découverte D2D « Découverte Directe ProSe », d'une communication relais D2D « Communication Relais ProSe », d'une communication D2D « Communication Directe ProSe », d'une transmission d'un message de découverte D2D « Découverte Directe ProSe », d'une transmission d'un message de communication relais D2D « Communication relais ProSe », d'une transmission d'un message de communication D2D « Communication Directe ProSe », d'une réception d'un message de découverte D2D, d'une réception d'un message de communication relais de retard D2D, d'une écoute d'un message de découverte D2D, ou d'une écoute d'un message de communication relais D2D.

13. Equipement utilisateur selon la revendication 12, dans lequel la première cellule et la seconde cellule appartiennent à des PLMN différents ou appartiennent à un même PLMN.

14. Equipement utilisateur selon la revendication 8, dans lequel la première cellule est la cellule secondaire ou la cellule de non-service de l'équipement utilisateur, et l'équipement utilisateur est autorisé à réaliser une communication D2D dans la première cellule ; ou la première cellule est la cellule secondaire ou la cellule de non-service de l'équipement utilisateur, et l'équipement utilisateur est autorisé à utiliser une ressource de la première cellule pour réaliser une communication D2D.
